(19) Europäisches Patentamt
European Patent Office
Office européen des brevets

(11) EP 4 468 620 A1

(12) **EUROPEAN PATENT APPLICATION**
published in accordance with Art. 153(4) EPC

(43) Date of publication:
27.11.2024 Bulletin 2024/48

(21) Application number: 23795075.3

(22) Date of filing: 15.04.2023

(51) International Patent Classification (IPC):
*H04B 7/06* (2006.01)

(52) Cooperative Patent Classification (CPC):
H04B 7/06; H04L 25/02; H04W 16/28

(86) International application number:
PCT/CN2023/088544

(87) International publication number:
WO 2023/207642 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.04.2022 CN 202210435707

(71) Applicant: Huawei Technologies Co., Ltd.
Shenzhen, Guangdong 518129 (CN)

(72) Inventors:
• ZHAO, Miao
Shenzhen, Guangdong 518129 (CN)

• ZHU, Xudong
Shenzhen, Guangdong 518129 (CN)
• YANG, Jianqiang
Shenzhen, Guangdong 518129 (CN)
• YANG, Jing
Shenzhen, Guangdong 518129 (CN)
• SUN, Yu
Shenzhen, Guangdong 518129 (CN)

(74) Representative: Maiwald GmbH
Engineering
Elisenhof
Elisenstrasse 3
80335 München (DE)

(54) **ARRAY GROUPING-BASED COMMUNICATION METHOD AND COMMUNICATION APPARATUS**

(57) An array grouping-based communication method and a communication apparatus are provided. The method includes: receiving a first signal from a first communication device by using M groups of analog weights, where at least two groups of analog weights in the M groups of analog weights are different, and M is an integer greater than or equal to 2; performing channel estimation based on the first signal to obtain M channel estimation results, where the M channel estimation results are in one-to-one correspondence with the M groups of analog weights; and performing signal receiving or sending processing based on the M channel estimation results by using a target analog weight, where the target analog weight is obtained based on the M groups of analog weights. In embodiments of this application, compared with receiving a signal from the first communication device by using each group of the M groups of analog weights in sequence, receiving the first signal from the first communication device by using the M groups of analog weights can speed up analog beam scanning, reduce scanning resource overheads, and improve uplink and downlink cell capacities of a mobile communication network.

FIG. 9

## Description

This application claims priority to Chinese Patent Application No. 202210435707.X, filed with the China National Intellectual Property Administration on April 24, 2022 and entitled "ARRAY GROUPING-BASED COMMUNICATION METHOD AND COMMUNICATION APPARATUS", which is incorporated herein by reference in its entirety.

## TECHNICAL FIELD

This application relates to the communication field, and in particular, to an array grouping-based communication method and a communication apparatus.

## BACKGROUND

As one of key 5G technologies, massive multiple-input multiple-output (massive multiple-input multiple-output, M-MIMO) can further improve a system capacity by using more spatial degrees of freedom. As a quantity of users increases and a cell capacity rate increases, the M-MIMO is widely used. However, as a quantity of antennas increases, a base station needs to allocate a radio frequency (radio frequency, RF) chain to each antenna element by using a conventional all-digital beamforming system. As a result, power consumption of the base station is high and baseband processing complexity is increased.

Hybrid beamforming (hybrid beamforming, HBF) is an effective method to reduce the baseband processing complexity and the power consumption. The HBF technology is a two-level beamforming technology. The base station implements first-level dynamic analog beamforming by using a phase shifter to change an antenna downtilt, and the baseband processing complexity can be reduced through spatial dimension reduction. In addition, the base station implements second-level digital beamforming through baseband processing, to implement multi-user scheduling and inter-user interference suppression.

The HBF technology depends on an analog beamforming (or referred to as analog weighting) technology. A currently used analog beamforming solution has a problem of high scanning overheads. Therefore, an analog beam scanning solution with low scanning overheads needs to be studied.

## SUMMARY

Embodiments of this application disclose an array grouping-based communication method and a communication apparatus.

According to a first aspect, an embodiment of this application provides an array grouping-based communication method. The method may be performed by a second communication device, or may be performed by a component (for example, a processor, a chip, or a chip system) of a second communication device, or may be implemented by a logical module or software that can implement all or some functions of a second communication device. The method includes: receiving a first signal from a first communication device by using M groups of analog weights, where at least two groups of analog weights in the M groups of analog weights are different, and M is an integer greater than or equal to 2; performing channel estimation based on the received first signal to obtain M channel estimation results, where the M channel estimation results are in one-to-one correspondence with the M groups of analog weights; and performing signal receiving or sending processing by using a target analog weights based on the M channel estimation results, where the target analog weight is obtained based on the M groups of analog weights.

In this embodiment of this application, compared with receiving a signal from the first communication device by using each group of the M groups of analog weights in sequence, receiving the first signal from the first communication device by using the M groups of analog weights can speed up analog beam scanning, reduce scanning resource overheads, and improve uplink and downlink cell capacities of a mobile communication network.

In a possible implementation, the receiving a first signal from a first communication device by using M groups of analog weights includes: receiving the first signal from the first communication device within K scanning periodicities by using the M groups of analog weights, where K is an integer greater than 0 and less than M. For example, K is 1.

In this implementation, compared with receiving the signals from the first communication device by using each group of the M groups of analog weights in sequence, receiving the first signal from the first communication device within the K scanning periodicities by using the M groups of analog weights can speed up analog beam scanning and reduce scanning resource overheads.

In a possible implementation, the M groups of analog weights are in one-to-one correspondence with M groups of phase shifters. Phase shifters in a same group are synchronously controlled, and phase shifters in different groups are independently controlled.

In this implementation, the M groups of analog weights are in one-to-one correspondence with the M groups of phase shifters. The phase shifters in the same group are synchronously controlled, and the phase shifters in the different groups are independently controlled. An analog weight corresponding to each group of phase shifters may be independently configured by independently controlling the phase shifters in the different groups.

In a possible implementation, the M groups of analog weights are in one-to-one correspondence with M groups of phase shifters. Phase shifters in a same group correspond to a same phase, and phase shifters in different groups correspond to different phases.

In this implementation, analog weights corresponding to the phase shifters in the different groups may be different, and analog weights corresponding to the phase shifters in the same group may be the same.

In a possible implementation, the M groups of analog weights correspond to (M1*M2) groups of antennas, and the (M1*M2) groups of antennas are any one of the following: M1 consecutive groups of antennas included in a horizontal dimension and M2 consecutive groups of antennas included in a vertical dimension; M1 consecutive groups of antennas included in a horizontal dimension and M2 interleaved groups of antennas included in a vertical dimension; M1 interleaved groups of antennas included in a horizontal dimension and M2 consecutive groups of antennas included in a vertical dimension; or M1 interleaved groups of antennas included in a horizontal dimension and M2 interleaved groups of antennas included in a vertical dimension. Both M1 and M2 are integers greater than or equal to 1, and (M1*M2) is greater than or equal to M.

In this implementation, the M groups of analog weights correspond to the (M1*M2) groups of antennas. A signal received by using each group of antennas in the (M1 *M2) groups of antennas is approximate to signals received by using all the antennas. It is ensured that the signal received by using each group of antennas can be used for channel estimation.

In a possible implementation, the target analog weight is one of the M groups of analog weights.

In this implementation, the target analog weight is one of the M groups of analog weights, and a good group of analog weights may be quickly determined from the M groups of analog weights as the target analog weight.

In a possible implementation, the target analog weight is one group in weight codebooks, and the M groups of analog weights are included in the weight codebooks.

In this implementation, the target analog weight is one group in the weight codebooks. In comparison with selecting the analog weight used for currently performing signal receiving or sending processing from the M groups of analog weights, an analog weight that is more suitable for currently performing signal receiving or sending processing may be obtained, and precision of beam sounding can be improved.

In a possible implementation, the target analog weight is not included in weight codebooks. For example, the array grouping-based communication method provided in the first aspect is applied to a terminal device. That the target analog weight is not included in weight codebooks means that the target analog weight is not included in weight codebooks configured for the terminal device. For another example, the array grouping-based communication method provided in the first aspect is applied to an access network device. That the target analog weight is not included in weight codebooks means that the target analog weight is not included in weight codebooks configured for the access network device.

In this implementation, the target analog weight is not included in the weight codebooks. The target analog weight may be understood as an analog weight that is more suitable than any analog weight in the weight codebooks for currently performing signal receiving or sending processing, so that precision of beam sounding and quantization precision of the analog weight can be improved.

In a possible implementation, the M channel estimation results are channel estimation results obtained by assuming that the first signal is not processed by the phase shifters corresponding to the M groups of analog weights. Optionally, the target analog weight is included in weight codebooks. Alternatively, the target analog weight is not included in weight codebooks.

In this implementation, the M channel estimation results are the channel estimation results obtained by assuming that the first signal is not processed by the phase shifters corresponding to the M groups of analog weights. Signal receiving or sending processing is performed based on the M channel estimation results by using the target analog weight. Therefore, precision of beam sounding can be improved.

In a possible implementation, the performing signal receiving or sending processing based on the M channel estimation results by using a target analog weight includes: determining M phase shifter-level channel response matrices based on the M channel estimation results, where the M phase shifter-level channel response matrices are in one-to-one correspondence with the M channel estimation results, and one of the M phase shifter-level channel response matrices is a channel response matrix corresponding to one of the M groups of phase shifters; determining, based on the M phase shifter-level channel response matrices, to perform signal receiving or sending processing by using the target analog weight; and performing signal receiving or sending processing by using the target analog weight. Each phase shifter-level channel response matrix may be understood as a channel response matrix that is corresponding to the group of phase shifters and that is not processed by using an analog weight.

In this implementation, it is determined, based on the M phase shifter-level channel response matrices, to perform signal receiving or sending processing by using the target analog weight, so that precision of beam sounding can be improved.

In a possible implementation, the determining, based on the M phase shifter-level channel response matrices, to perform signal receiving or sending processing by using the target analog weight includes: determining, based on the M phase shifter-level channel response matrices, a performance metric corresponding to each analog weight in the weight codebooks, where the performance metric corresponding to any analog weight in the weight codebooks is used to measure performance of currently performing signal receiving or sending processing by using the any analog weight, and the weight codebooks include the target analog weight; and determining, based on the performance metrics of the analog weights in the weight codebooks, to perform signal receiving or sending processing by using the target analog weight.

In this implementation, it is determined, based on the performance metrics of the analog weights in the weight codebooks, to perform signal receiving or sending processing by using the target analog weight, so that the target analog weight that is more suitable for currently performing signal receiving or sending processing may be accurately and quickly determined.

In a possible implementation, the determining, based on the M phase shifter-level channel response matrices, to perform signal receiving or sending processing by using the target analog weight includes: obtaining a first channel response matrix based on the M phase shifter-level channel response matrices; and performing matrix decomposition on the first channel response matrix, and constructing the target analog weight based on an obtained eigenvector.

In this implementation, the matrix decomposition is performed on the first channel response matrix, and the target analog weight is constructed based on the obtained eigenvector. It can be learned that the target analog weight is not limited to existing weight codebooks, but is obtained through calculation. Obtaining a to-be-used analog weight in this manner can improve precision of beam sounding and quantization precision of the analog weight.

In a possible implementation, the determining M phase shifter-level channel response matrices based on the M channel estimation results includes: obtaining a second channel response matrix, where the second channel response matrix includes a channel response matrix obtained by processing a third channel response matrix by using a first analog weight and a channel response matrix obtained by processing the third channel response matrix by using a second analog weight, and the first analog weight and the second analog weight are included in the M groups of analog weights; and obtaining a third channel response based on the second channel response matrix and an analog weight matrix, where the analog weight matrix is obtained based on two or more groups of analog weights, and the third channel response matrix is included in the M phase shifter-level channel response matrices.

In this implementation, the third channel response (a phase shifter-level channel response matrix) is obtained based on the second channel response matrix and the analog weight matrix, and the M phase shifter-level channel response matrices are used to determine a to-be-used analog weight.

In a possible implementation, the array grouping-based communication method provided in the first aspect is applied to a terminal device or an apparatus in the terminal device, the first signal is a downlink signal (for example, a pilot signal), and the first communication device is an access network device.

In this implementation, the terminal device may implement beam scanning more quickly.

In a possible implementation, the array grouping-based communication method provided in the first aspect is applied to an access network device or an apparatus in the access network device, the first signal is an uplink signal (for example, a pilot signal), and the first communication device is a terminal device.

In this implementation, the access network device may implement beam scanning more quickly.

According to a second aspect, an embodiment of this application provides a communication apparatus. The communication apparatus has a function of implementing behavior in the method embodiment in the first aspect. The communication apparatus may be a communication device (for example, a mobile phone, a base station, or a notebook computer), or may be a component (for example, a processor, a chip, or a chip system) of a communication device, or may be a logical module or software that can implement all or some functions of a communication device. The function of the communication apparatus may be implemented by hardware, or may be implemented by hardware by executing corresponding software. The hardware or the software includes one or more modules or units corresponding to the foregoing function. In a possible implementation, the communication apparatus includes an interface module and a processing module. The interface module is configured to receive a first signal from a first communication device by using M groups of analog weights, where at least two groups of analog weights in the M groups of analog weights are different, and M is an integer greater than or equal to 2. A processing module is configured to perform channel estimation based on the first signal received by the interface module to obtain M channel estimation results, where the M channel estimation results are in one-to-one correspondence with the M groups of analog weights. The processing module is further configured to control, based on the M channel estimation results, the interface module to perform signal receiving or sending processing by using a target analog weight, where the target analog weight is obtained based on the M groups of analog weights.

In a possible implementation, the interface module is specifically configured to receive the first signal from the first communication device within K scanning periodicities by using the M groups of analog weights, where K is an integer greater than 0 and less than M.

In a possible implementation, the M groups of analog weights are in one-to-one correspondence with M groups of phase shifters. Phase shifters in a same group are synchronously controlled, and phase shifters in different groups are independently controlled.

In a possible implementation, the M groups of analog weights are in one-to-one correspondence with M groups of phase shifters. Phase shifters in a same group correspond to a same phase, and phase shifters in different groups correspond to different phases.

In a possible implementation, the M groups of analog weights correspond to (M1*M2) groups of antennas, and the (M1*M2) groups of antennas are any one of the following: M1 consecutive groups of antennas included in a horizontal dimension and M2 consecutive groups of antennas included in a vertical dimension; M1 consecutive groups of antennas included in a horizontal dimension and M2 interleaved groups of antennas included in a vertical dimension; M1 interleaved groups of antennas included in a horizontal dimension and M2 consecutive groups of antennas included in a vertical dimension; or M1 interleaved groups of antennas included in a horizontal dimension and M2 interleaved groups of antennas included in a vertical dimension. Both M1 and M2 are integers greater than or equal to 1, and (M1*M2) is greater than or equal to M.

In a possible implementation, the target analog weight is one of the M groups of analog weights.

In a possible implementation, the target analog weight is one group in weight codebooks, and the M groups of analog weights are included in the weight codebooks.

In a possible implementation, the target analog weight is not included in weight codebooks.

In a possible implementation, the M channel estimation results are channel estimation results obtained by assuming that the first signal is not processed by the phase shifters corresponding to the M groups of analog weights.

In a possible implementation, the processing module is specifically configured to: determine M phase shifter-level channel response matrices based on the M channel estimation results, where the M phase shifter-level channel response matrices are in one-to-one correspondence with the M channel estimation results, and one of the M phase shifter-level channel response matrices is a channel response matrix corresponding to one of the M groups of phase shifters; determine, based on the M phase shifter-level channel response matrices, to perform signal receiving or sending processing by using the target analog weight; and perform signal receiving or sending processing by using the target analog weight.

In a possible implementation, the processing module is specifically configured to: determine, based on the M phase shifter-level channel response matrices, a performance metric corresponding to each analog weight in the weight codebooks, where the performance metric corresponding to any analog weight in the weight codebooks is used to measure performance of currently performing signal receiving or sending processing by using the any analog weight, and the weight codebooks include the target analog weight; and determine, based on the performance metrics of the analog weights in the weight codebooks, to perform signal receiving or sending processing by using the target analog weight.

In a possible implementation, the processing module is specifically configured to: obtain a first channel response matrix based on the M phase shifter-level channel response matrices; and perform matrix decomposition on the first channel response matrix, and construct the target analog weight based on an obtained eigenvector.

In a possible implementation, the processing module is specifically configured to: obtain a second channel response matrix, where the second channel response matrix includes a channel response matrix obtained by processing a third channel response matrix by using a first analog weight and a channel response matrix obtained by processing the third channel response matrix by using a second analog weight, and the first analog weight and the second analog weight are included in the M groups of analog weights; and obtain a third channel response based on the second channel response matrix and an analog weight matrix, where the analog weight matrix is obtained based on two or more groups of analog weights, and the third channel response matrix is included in the M phase shifter-level channel response matrices.

In a possible implementation, the communication apparatus provided in the second aspect is a terminal device or an apparatus in the terminal device, and the first signal is a downlink signal.

In a possible implementation, the communication apparatus provided in the second aspect is an access network device or an apparatus in the access network device, and the first signal is an uplink signal.

For technical effects brought by the possible implementations of the second aspect, refer to the descriptions of the technical effects of the first aspect or the possible implementations of the first aspect.

According to a third aspect, this application provides a communication apparatus. The communication apparatus includes a processor. The processor is coupled to a memory, the memory is configured to store a program or instructions, and when the program or the instructions are executed by the processor, the communication apparatus is enabled to perform the method according to any one of the first aspect or the possible implementations of the first aspect.

In this embodiment of this application, in a process of performing the foregoing method, a process of sending information (or a signal) in the foregoing method may be understood as a process of outputting information according to the instructions of the processor. When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information into the processor. Further, after the transceiver receives the information, other processing may need to be performed on the information before the information is input into the processor.

An operation like sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located inside the communication apparatus.

In a possible implementation, the processor and the memory may be further integrated into one component, in other words, the processor and the memory may be further integrated together.

In a possible implementation, the communication apparatus further includes a transceiver. The transceiver is configured to receive a signal, send a signal, and so on.

According to a fourth aspect, this application provides another communication apparatus. The communication apparatus includes a processing circuit and an interface circuit. The interface circuit is configured to obtain data or output data. The processing circuit is configured to perform the corresponding method according to any one of the first aspect or the possible implementations of the first aspect.

According to a fifth aspect, this application provides a computer-readable storage medium. The computer-readable storage medium stores a computer program, and the computer program includes program instructions. When the program instructions are executed, a computer is enabled to perform the method according to any one of the first aspect or the possible implementations of the first aspect.

According to a sixth aspect, this application provides a computer program product. The computer program product includes a computer program, and the computer program includes program instructions. When the program instructions are executed, a computer is enabled to perform the method according to any one of the first aspect or the possible implementations of the first aspect.

## BRIEF DESCRIPTION OF DRAWINGS

To describe the technical solutions in embodiments of this application or in the background more clearly, the following briefly describes the accompanying drawings for describing embodiments of this application or the background.

FIG. 1 is a diagram of an HBF architecture according to this application;

FIG. 2 is a diagram of analog beam scanning according to this application;

FIG. 3 is an example of a wireless communication system according to an embodiment of this application;

FIG. 4 is a diagram of a communication apparatus according to an embodiment of this application;

FIG. 5 is a flowchart of a signal processing procedure according to an embodiment of this application;

FIG. 6A, FIG. 6B, FIG. 6C, and FIG. 6D each are a diagram of an example of antenna grouping according to an embodiment of this application;

FIG. 7A, FIG. 7B, and FIG. 7C each are a diagram of an example of antenna grouping according to an embodiment of this application;

FIG. 8A, FIG. 8B, FIG. 8C, and FIG. 8D each are a diagram of an example of antenna grouping according to an embodiment of this application;

FIG. 9 is an interaction flowchart of an array grouping-based communication method according to an embodiment of this application;

FIG. 10 is an interaction flowchart of another array grouping-based communication method according to an embodiment of this application;

FIG. 11 is an interaction flowchart of another array grouping-based communication method according to an embodiment of this application;

FIG. 12 is an interaction flowchart of another array grouping-based communication method according to an embodiment of this application;

FIG. 13 is a diagram of a structure of a communication apparatus 1300 according to an embodiment of this application;

FIG. 14 is a diagram of a structure of another communication apparatus 140 according to an embodiment of this application; and

FIG. 15 is a diagram of a structure of another communication apparatus 150 according to an embodiment of this application.

## DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a specific feature, structure, or characteristic described with reference to embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described in this specification may be combined with another embodiment.

Terms used in the following embodiments of this application are merely intended to describe specific embodiments, but are not intended to limit this application. As used in the specification of this application and the appended claims, singular expressions "one", "a", "the", "the foregoing", "this", and "this one" are intended to include plural expressions, unless otherwise clearly specified in the context. It should also be understood that the term "and/or" used in this application indicates and includes any or all possible combinations of one or more listed items. For example, "A and/or B" may represent three cases: Only A exists, only B exists, and both A and B exist, where A and B may be singular or plural. The term "a plurality of" used in this application means two or more.

The following first describes terms and technical features in embodiments of this application.

HBF technology:

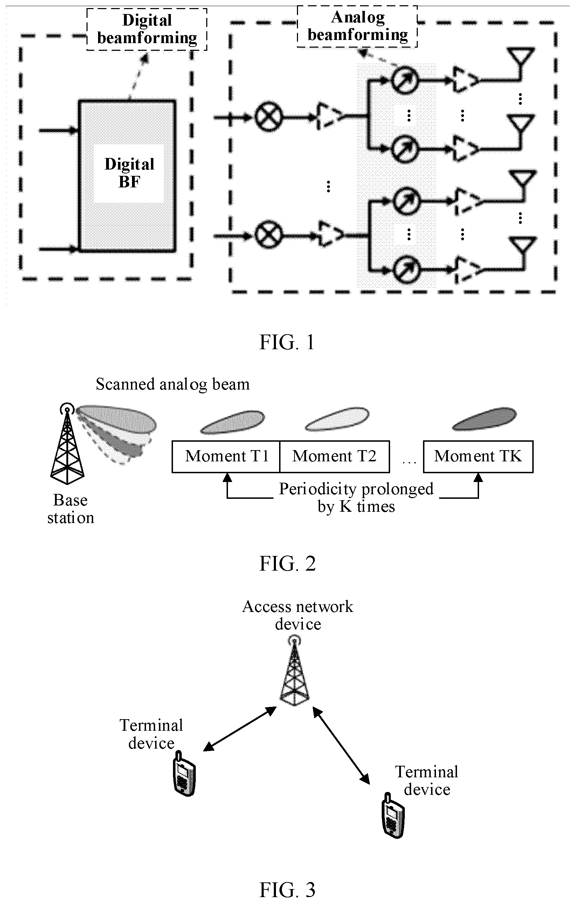

The HBF technology is a technology that can reduce baseband processing complexity and power consumption. In the HBF technology, the following two layers are used: an analog architecture and a digital architecture. FIG. 1 is a diagram of an HBF architecture according to this application. As shown in FIG. 1, the HBF architecture includes two layers: an analog architecture and a digital (digital) architecture. Digital BF represents the digital architecture. A signal of a baseband processor implements beamforming of a digital part (digital beamforming shown in FIG. 1) through a baseband port, and then is processed by an analog phase shifter (also referred to as an analog weight/analog weighting/analog beam) through an intermediate frequency channel to complete beamforming of an analog part (analog beamforming shown in FIG. 1).

The HBF technology depends on an analog weighting (or referred to as analog beamforming) process, and analog weight value scanning (or analog beam scanning) needs to be performed for a plurality of times. FIG. 2 is a diagram of analog beam scanning according to this application. As shown in FIG. 2, a base station receives an uplink signal (for example, a sounding pilot signal) by using a group of analog weights at each of K consecutive moments (that is, a moment T1 to a moment TK). In FIG. 2, a beam above each moment represents a signal received by a base station side at the moment, and a plurality of beams on the base station side represent uplink signals received by using different analog weights at different moments. When the base station performs analog beam scanning in the manner shown in FIG. 2, the base station obtains, through channel estimation at the K consecutive moments, estimation of K channel responses from the base station to a terminal device, where each channel response corresponds to one group of analog weights. Then, an optimal analog weight is used to receive (or send) uplink or downlink data based on the estimation of the K channel responses. In other words, the base station can determine, only after performing analog beam scanning for a plurality of times, the analog weight used to receive (or send) the uplink or downlink data.

Analog weight value, analog weighting, and analog weight value scanning:
The analog weight value represents a weight matrix in an analog weighting process, and a phase corresponding to a phase shifter forms the weight matrix. Generally, types of analog weight values are limited. A network side pre-stores all analog weight value combinations (that is, weight codebooks), and only one of the analog weight values can be used at each moment.

The analog weighting represents a process of loading an analog weight value, which describes analog processing of a signal by using a phase shifter, which is equivalent to a process of multiplying a weight matrix.

The analog weight value scanning describes a process in which a network side uses different analog weight values at different moments. This process is referred to as "scanning" of the analog weight values.

It can be learned from the foregoing descriptions that, in the foregoing analog beam scanning manner, time for completing beam scanning of all analog weights is prolonged by K times, where K represents a quantity of analog beams that need to be scanned. Consequently, more time resources are equivalently consumed. In addition, due to movement of the terminal device and environment fluctuation, a channel is affected by aging. Consequently, an increase in time resource consumption results in a decrease in a real-time channel tracking capability, and performance is deteriorated. In addition, the HBF technology depends on the analog weighting. Because the analog weight value has disadvantages of limited precision and a limited quantity, wide application of the HBF technology is further affected. It should be understood that using an analog beam scanning solution with low scanning overheads can reduce time overheads and avoid performance deterioration. Therefore, the analog beam scanning solution with the low scanning overheads needs to be studied. According to an array grouping-based communication method provided in this application, analog beam scanning can be sped up, scanning resource overheads can be reduced, and uplink and downlink cell capacities of a mobile communication network can be improved. Further, the array grouping-based communication method in this application may overcome, to some extent, the disadvantages of limited precision and a limited quantity that the analog weight value has.

The following describes, with reference to the accompanying drawings, a communication system to which the array grouping communication method provided in this application is applicable.

FIG. 3 is an example of a wireless communication system according to an embodiment of this application. As shown in FIG. 3, the communication system includes: one or more terminal devices, where in FIG. 3, only two terminal devices are used as an example; and one or more access network devices (for example, base stations) that can provide a communication service for the terminal device, where in FIG. 3, only one access network device is used as an example. In some embodiments, the wireless communication system may include cells, each cell includes one or more access network devices, and the access network device provides a communication service for a plurality of terminals. The wireless communication system may also perform point-to-point communication, for example, communication between a plurality of terminals.

The terminal is a device that has a wireless transceiver function. The terminal may communicate with one or more core network (core network, CN) devices (or referred to as core devices) via an access network device (or referred to as an access device) in a radio access network (radio access network, RAN). The terminal may be deployed on land, including an indoor device, an outdoor device, a handheld device, or a vehicle-mounted device; or may be deployed on water (for example, on a ship); or may be deployed in the air (for example, on a plane, a balloon, or a satellite). In embodiments of this application, the terminal may also be referred to as a terminal device or user equipment (user equipment, UE). The terminal may be a mobile phone (mobile phone), a mobile station (mobile station, MS), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal in transportation safety (transportation safety), a wireless terminal device in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The terminal may include various handheld devices, vehicle-mounted devices, wearable devices, or computing devices that have a wireless communication function, or other processing devices connected to a wireless modem. Optionally, the terminal may be a handheld device (handset) with a wireless communication function, a vehicle-mounted device, a wearable device, a terminal in the internet of things, a terminal in the internet of vehicles, a terminal in any form in 5G or a communication system evolved after 5G, or the like. This is not limited in this application.

The access network device may be any device that has a wireless transceiver function and can communicate with the terminal, for example, a radio access network (radio access network, RAN) node that connects the terminal to a wireless network. Currently, some examples of the RAN node include a macro base station, a micro base station (also referred to as a small cell), a relay station, an access point, a gNB, a transmission reception point (transmission reception point, TRP), an evolved NodeB (evolved NodeB, eNB), a radio network controller (radio network controller, RNC), a home base station (for example, a home evolved NodeB, or a home NodeB, HNB), a baseband unit (baseband unit, BBU), a Wi-Fi access point (access point, AP), an integrated access and backhaul (integrated access and backhaul, IAB), and the like.

The following describes, with reference to the accompanying drawings, a communication apparatus that can implement an array grouping communication method provided in this application.

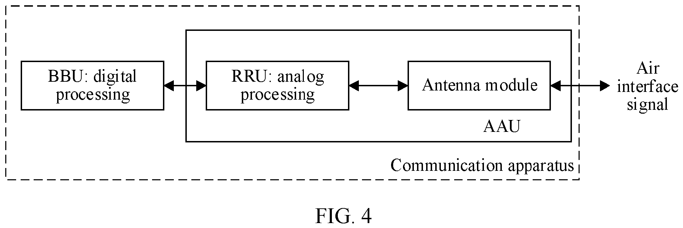

FIG. 4 is a diagram of a communication apparatus according to an embodiment of this application. As shown in FIG. 4, the communication apparatus includes a baseband unit (baseband unit, BBU), a remote radio unit (remote radio unit, RRU), and an antenna module. The RRU can be replaced with an RF unit. The antenna module may be referred to as an antenna feeder module or an antenna array. The BBU may be a baseband processor. An analog phase shifter in the RRU may control antenna arrays in groups (in other words, the analog phase shifter in the RRU implements group control of the antenna arrays). For details, refer to the following descriptions. The RRU and antenna module are collectively referred to as an active antenna unit (active antenna unit, AAU). It may be understood that the communication apparatus shown in this embodiment of this application may further have more components or modules than those in FIG. 4. This is not limited in this embodiment of this application. Software implementation of the communication apparatus provided in this embodiment of this application may be but is not limited to implementation on the AAU, the RRU, and the BBU. Functions of each module are described as follows.

The antenna module is a component that is in a wireless communication apparatus and that is configured to transmit or receive an electromagnetic wave, and is configured to convert an analog signal into a space electromagnetic wave or receive a space electromagnetic wave and convert the space electromagnetic wave into an analog signal.

The AAU is the active antenna unit, which integrates functions of the RRU and the antenna module.

The RRU converts an intermediate frequency signal into a radio frequency signal and connects to the antenna module through a feeder.

The BBU performs digital processing on a baseband signal, including signal processing processes such as digital beam conversion, coding, and modulation.

In a possible implementation, the communication apparatus in FIG. 4 is an access network device, for example, a base station. For a downlink channel, a data signal flow is transferred from the BBU to the RRU, and then to the antenna module to send an air interface signal. For an uplink channel, a data signal flow is received from the antenna module and then transferred to the BBU module through the RRU module for processing.

In a possible implementation, the communication apparatus in FIG. 4 is a terminal device, for example, a mobile phone. For an uplink channel, a data signal flow is transferred from the BBU to the RRU, and then to the antenna module to send an air interface signal. For a downlink channel, a data signal flow is received from the antenna module and then transferred to the BBU module through the RRU module for processing.

FIG. 4 describes the structure of the communication apparatus according to an embodiment of this application. The array grouping-based communication method provided in this application is mainly applied to a signal processing procedure in which analog beam scanning needs to be quickly and accurately implemented. The following describes, with reference to the accompanying drawings, an example of a signal processing procedure to which the array grouping-based communication method provided in this application is applicable.

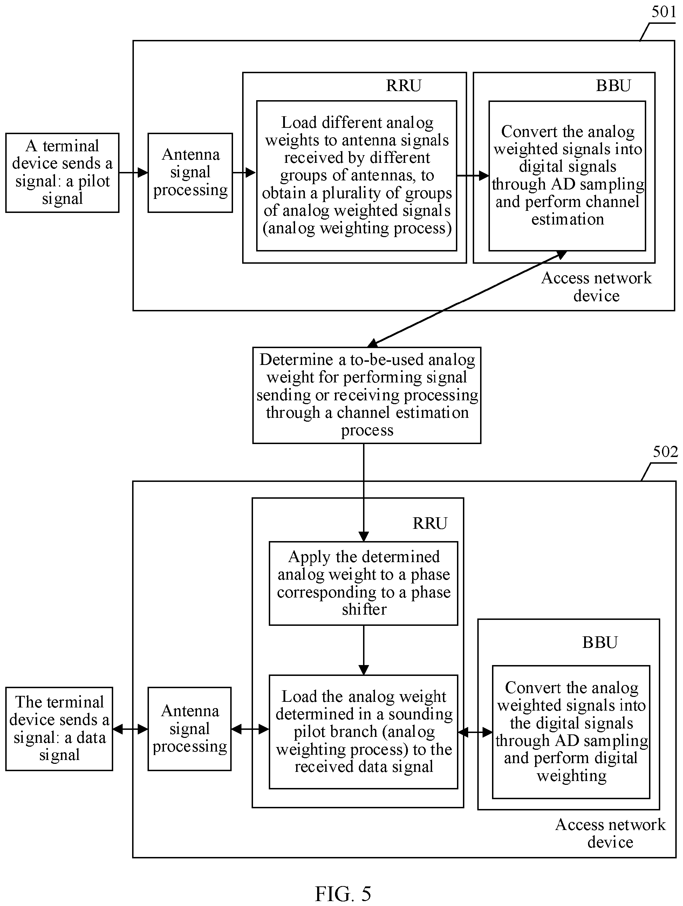

FIG. 5 is a flowchart of a signal processing procedure according to an embodiment of this application. As shown in FIG. 5, a sounding pilot branch is shown in a solid-line box 501, and a service data branch is shown in a solid-line box 502. The sounding pilot branch may be understood as that an access network device performs an analog weighting process and a channel estimation process based on a pilot signal (for example, a sounding reference signal (sounding reference signal, SRS)) from a terminal device. An objective of performing the sounding pilot branch by the access network device is to determine, through the analog weighting process and the channel estimation process, a to-be-used analog weight for performing signal sending or receiving processing, in other words, the objective is to implement a design process of the analog weight. In this application, the analog weight and an analog weight value are a same concept. The sounding pilot branch includes the following processing process. The access network device receives the pilot signal from the terminal device via an antenna; loads different analog weights to antenna signals received by different groups of antennas, to obtain a plurality of groups of analog weighted signals, where a phase shifter implements antenna grouping control; and converts the analog weighted signals into digital signals through AD sampling and performs channel estimation (which may be referred to as channel sounding). The service data branch may be understood as that the access network device implements an analog weighting process based on the analog weight determined in the sounding pilot branch, to implement signal sending or receiving. An objective of performing the service data branch by the access network device is to implement signal sending or receiving. A possible processing process (corresponding to a signal receiving process) of the service data branch is as follows: The access network device receives a data signal (carrying service data) from the terminal device via the antenna; loads the analog weight determined in the sounding pilot branch (the analog weighting process) to the received data signal, in other words, applies the determined analog weight to a phase corresponding to the phase shifter; and converts the analog weighted signals into the digital signals through AD sampling and performs digital weighting. Another possible processing process (corresponding to a signal sending process) of the service data branch is as follows: The access network device generates a data signal based on to-be-sent service data; performs digital weighting on the data signal; converts a digital weighted signal into an analog signal through DA sampling; loads the analog weight determined in the sounding pilot branch (the analog weighting process) to the analog signal, in other words, applies the determined analog weight to a phase corresponding to the phase shifter; and sends an analog signal obtained through analog weighting via the antenna.

The access network device is used as an example in FIG. 5 to describe an example of the signal processing procedure to which an array grouping-based communication method provided in this application is applicable. It should be understood that the terminal device may perform a signal processing procedure similar to that in FIG. 5. Details are not described herein again.

A main invention point of this application is that a signal is simultaneously received by using a plurality of groups of analog weights in an antenna grouping manner. For example, antennas in a communication apparatus are divided into a plurality of groups, antennas in different groups correspond to different analog weights, and antennas in a same group correspond to a same analog weight. The communication apparatus may simultaneously receive the signal by using the plurality of groups of analog weights (each group of analog weights corresponds to one or more groups of antennas). Therefore, the communication apparatus can receive the signal by using a plurality of groups of different analog weights in one analog beam scanning process. Refer to FIG. 2. In a currently used analog beam scanning manner, a signal is received by using a group of analog weights at each of K consecutive moments (that is, the moment T1 to the moment TK). Each moment may be understood as one analog beam scanning periodicity or one analog beam scanning process. According to the array grouping-based communication method provided in this application, a technical effect of receiving signals by using K groups of different analog weights can be achieved in one analog beam scanning periodicity or one analog beam scanning process, so that analog beam scanning can be sped up. The following describes, with reference to the accompanying drawings, some possible antenna grouping manners provided in embodiments of this application.

In this application, a communication apparatus implements antenna grouping by using a phase shifter corresponding to each antenna, and each group of antennas corresponds to one group of phase shifters. Optionally, phase shifters corresponding to antennas in a same group correspond to a same phase, and phase shifters corresponding to antennas in different groups correspond to different phases. In other words, the antennas in the same group are controlled by a same phase shifter (corresponding to the same phase), and the antennas in different groups are controlled by different phase shifters (corresponding to the different phases). In a possible implementation, M groups of analog weights used by the communication apparatus are in one-to-one correspondence with M groups of phase shifters. Phase shifters in a same group are synchronously controlled, and phase shifters in different groups are independently controlled. In a possible implementation, M groups of analog weights used by the communication apparatus are in one-to-one correspondence with M groups of phase shifters. Phase shifters in a same group correspond to a same phase, and phase shifters in different groups correspond to different phases. It should be noted that the analog weight corresponding to each group of phase shifters may be preconfigured (or implemented by fixed storage), and may also allow to be updated to different analog weights.

A multi-antenna architecture in the communication apparatus may be described as a two-dimensional antenna form of (*Ver* * *Hor*), that is, a vertical array plane*a horizontal array plane, where *Ver* is an integer greater than or equal to 2, and *Hor* is an integer greater than or equal to 2. Generally, a quantity of horizontal antennas (that is, in a horizontal dimension) represents a quantity of columns of a two-dimensional antenna pattern, and a quantity of vertical antennas (that is, in a vertical dimension) represents a quantity of rows of the two-dimensional antenna pattern. It should be noted that a quantity of antennas refers to a quantity of antennas of baseband processing, not a quantity of antennas at a phase shifter-level. In a multi-polarized scenario, a plurality of polarized antennas may be included in each vertical or horizontal location.

In the array grouping-based communication method provided in this application, the communication apparatus receives a first signal from a first communication device by using M groups of analog weights. The M groups of analog weights correspond to (M1*M2) groups of antennas, and the (M1*M2) groups of antennas are any one of the following: M1 consecutive groups of antennas included in a horizontal dimension and M2 consecutive groups of antennas included in a vertical dimension; M1 consecutive groups of antennas included in a horizontal dimension and M2 interleaved groups of antennas included in a vertical dimension; M1 interleaved groups of antennas included in a horizontal dimension and M2 consecutive groups of antennas included in a vertical dimension; or M1 interleaved groups of antennas included in a horizontal dimension and M2 interleaved groups of antennas included in a vertical dimension. Both M1 and M2 are integers greater than or equal to 1, and (M1*M2) is greater than or equal to M. For example, the communication apparatus is an access network device, the first communication apparatus is a terminal device, and the first signal is an uplink signal. For another example, the communication apparatus is a terminal device, the first communication apparatus is an access network device, and the first signal is a downlink signal. One group of analog weights may correspond to one group of antennas, or may correspond to a plurality of groups of antennas. In other words, the plurality of groups of antennas may correspond to a same group of analog weights. It should be noted that the M1 consecutive groups of antennas included in the horizontal dimension are defined as follows: For antennas numbered 1~*Hor*, $\langle 1,2,...\frac{Hor}{M_1}\rangle$ is a first group, $\langle \frac{Hor}{M_1}+1, \frac{Hor}{M_1}+2, ... \frac{2Hor}{M_1}\rangle$ is a second group, and so on. The M1 interleaved groups of antennas included in the horizontal dimension are defined as follows: For antennas numbered 1~*Hor*, $\langle 1, 1+M_1, 1+2M_1 ... \rangle$ is a first group, $\langle 2, 2+M_1, 2+2M_1 ... \rangle$ is a second group, and so on. It should be understood that, for the M2 consecutive groups of antennas included in the vertical dimension, specific descriptions of a grouping solution are consistent with those in the horizontal dimension, provided that the number is changed to *Ver*. For the M2 interleaved groups of antennas included in the vertical dimension, specific descriptions of a grouping solution are consistent with those in the horizontal dimension, provided that the number is changed to *Ver*.

In this embodiment of this application, a quantity of groups includes but is not limited to: M = 16: $M_1$ = 1,2,4,8,16, $M_2$ = 16,8,4,2,1 ; M = 8: $M_1$ = 1,2,4,8, $M_2$ = 8,4,2,1 ; M = 4: $M_1$ = 1,2,4, $M_2$ = 4,2,1; and M = 2: $M_1$ = 1,2, $M_2$ = 2,1, where $M_1$ does not exceed *Hor*, and $M_2$ does not exceed *Ver*. In this application, M1 and M2 are not limited to even numbers, and at least one of M1 and M2 is an integer greater than 1. For example, M1 is 3, M2 is 8, and M is 24. For another example, M1 is 4, M2 is 7, and M is 28. For another example, M1 is 1, M2 is 2, and M is 2.

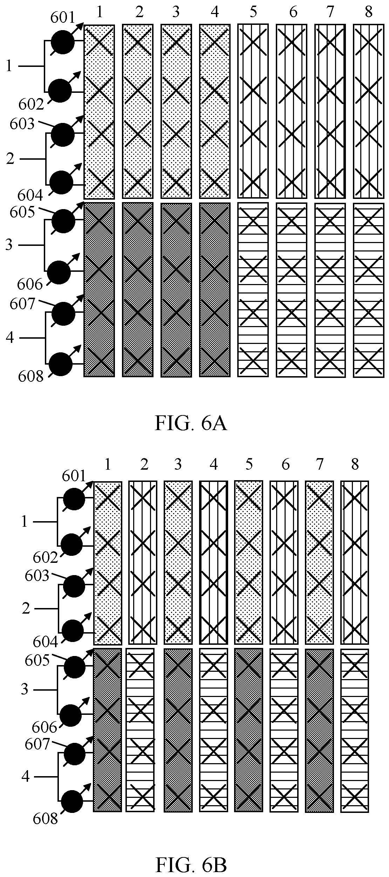

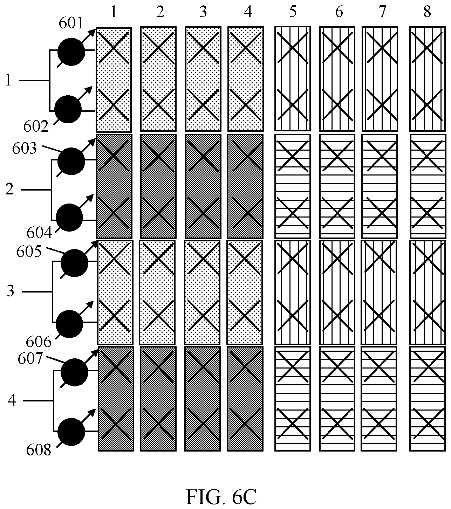

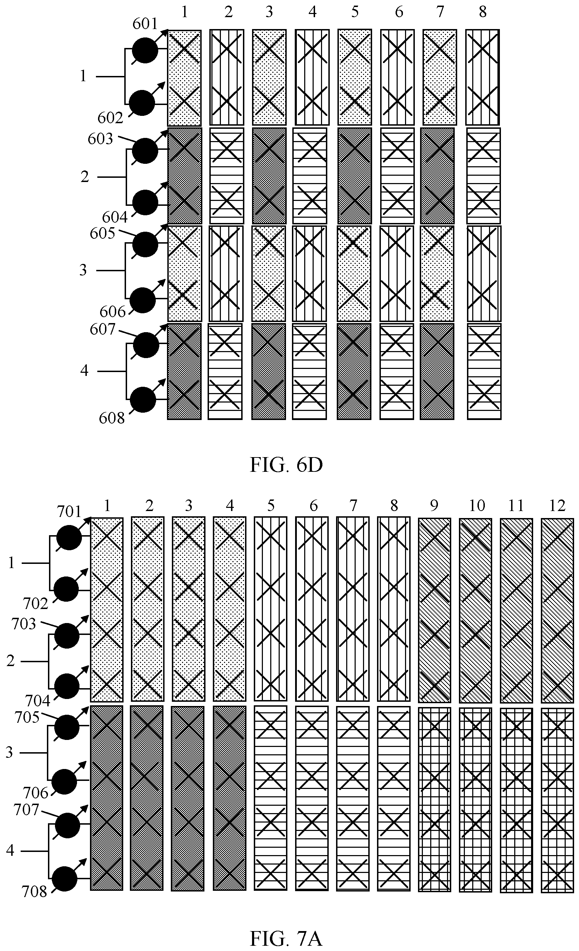

A location of a phase shifter dimension includes a vertical dimension or a horizontal dimension. FIG. 6A, FIG. 6B, FIG. 6C, and FIG. 6D each are a diagram of an example of antenna grouping according to an embodiment of this application. In FIG. 6A to FIG. 6D, 601 to 608 represent eight phase shifters, each "×" represents one antenna (for the phase shifter), and antennas with a same shading are antennas of a same group. In the vertical dimension, a quantity of phase shifters is eight, and a quantity of baseband processing modules is four. In the horizontal dimension, eight antennas (that is, 1, 2, 3, 4, 5, 6, 7, and 8 in the horizontal dimension) are included, and in the vertical dimension (that is, a baseband channel processing dimension), four antennas (that is, 1, 2, 3, and 4 in the vertical dimension) are included. FIG. 6A shows a case in which M1 consecutive groups of antennas are included in the horizontal dimension, and M2 consecutive groups of antennas are included in the vertical dimension. As shown in FIG. 6A, the antennas include two consecutive groups of antennas (that is, M1=2) in the horizontal dimension, and include two consecutive groups of antennas (M2=2) in the vertical dimension. For the horizontal dimension, (1,2,3,4) is a first group and (5,6,7,8) is a second group; and for the vertical dimension, (1,2) is a first group and (3,4) is a second group. FIG. 6B shows a case in which M1 interleaved groups of antennas are included in the horizontal dimension, and M2 consecutive groups of antennas are included in the vertical dimension. As shown in FIG. 6B, the antennas include two interleaved groups of antennas (that is, M1=2) in the horizontal dimension, and include two consecutive groups of antennas (M2=2) in the vertical dimension. For the horizontal dimension, (1,3,5,7) is a first group and (2,4,6,8) is a second group; and for the vertical dimension, (1,2) is a first group and (3,4) is a second group. FIG. 6C shows a case in which M1 consecutive groups of antennas are included in the horizontal dimension, and M2 interleaved groups of antennas are included in the vertical dimension. As shown in FIG. 6C, the antennas include two consecutive groups of antennas (that is, M1=2) in the horizontal dimension, and include two interleaved groups of antennas (M2=2) in the vertical dimension. For the horizontal dimension, (1,2,3,4) is a first group and (5,6,7,8) is a second group; and for the vertical dimension, (1,3) is a first group and (2,4) is a second group. FIG. 6D shows a case in which M1 interleaved groups of antennas are included in the horizontal dimension, and M2 interleaved groups of antennas are included in the vertical dimension. As shown in FIG. 6D, the antennas include two interleaved groups of antennas (that is, M1=2) in the horizontal dimension, and include two interleaved groups of antennas (M2=2) in the vertical dimension. For the horizontal dimension, (1,3,5,7) is a first group and (2,4,6,8) is a second group; and for the vertical dimension, (1,3) is a first group and (2,4) is a second group. In a possible implementation, antennas in a same group use a same analog weight, and antennas in different groups use different analog weights. The four groups of antennas in FIG. 6A are used as an example, and any two groups of antennas in the four groups of antennas use different analog weights. In other words, the four groups of antennas in FIG. 6A may correspond to four groups of different analog weights. To be specific, each group of antennas corresponds to one group of analog weights. In this application, a group of analog weights may include one analog weight, or may include two or more analog weights. This is not limited in this application. In a possible implementation, antennas in a same group use a same analog weight, and antennas in different groups use a same analog weight or different analog weights. The four groups of antennas in FIG. 6A are used as an example. The four groups of antennas are respectively an antenna group 1, an antenna group 2, an antenna group 3, and an antenna group 4. The antenna group 1 is a first group in the horizontal dimension and a first group in the vertical dimension. The antenna group 2 is a second group in the horizontal dimension and a first group in the vertical dimension. The antenna group 3 is a first group in the horizontal dimension and a second group in the vertical dimension. The antenna group 2 is a second group in the horizontal dimension and a second group in the vertical dimension. The antenna group 1 and the antenna group 4 correspond to a same group of analog weights, and the antenna group 2 and the antenna group 3 correspond to a same group of analog weights. In other words, the four groups of antennas in FIG. 6A correspond to two groups of analog weights. The four groups of antennas in FIG. 6D are used as an example. The four groups of antennas are respectively an antenna group 5, an antenna group 6, an antenna group 7, and an antenna group 8. The antenna group 5 is a first group in the horizontal dimension and a first group in the vertical dimension. The antenna group 6 is a second group in the horizontal dimension and a first group in the vertical dimension. The antenna group 7 is a first group in the horizontal dimension and a second group in the vertical dimension. The antenna group 8 is a second group in the horizontal dimension and a second group in the vertical dimension. The antenna group 5 and the antenna group 8 correspond to a same group of analog weights, and the antenna group 6 and the antenna group 7 correspond to a same group of analog weights. In other words, the four groups of antennas in FIG. 6A correspond to two groups of analog weights. The foregoing describes only some but not all examples in which some of the plurality of antenna groups use the same analog weight. It should be understood that, in different application scenarios, a same analog weight may be configured for a plurality of groups of antennas based on an actual requirement.

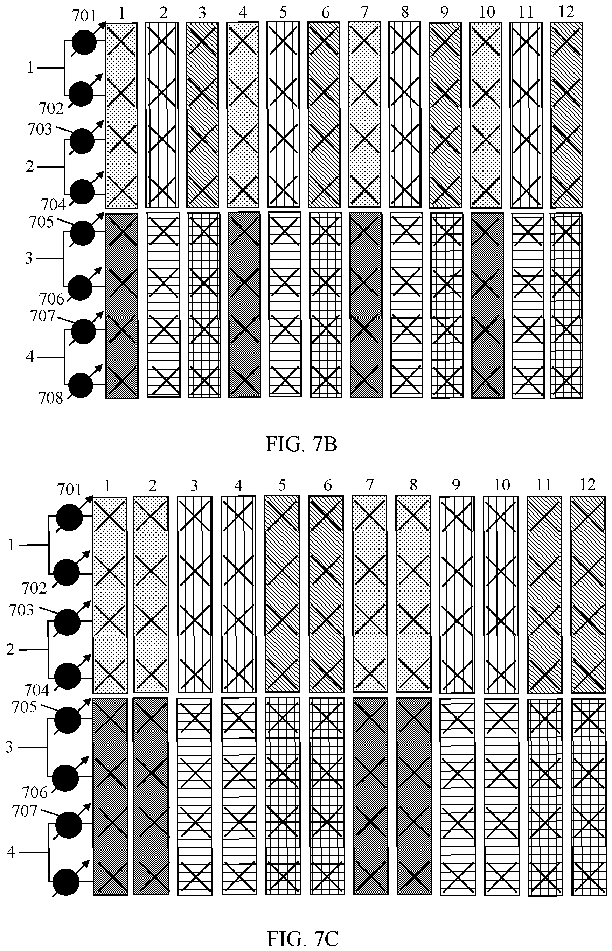

FIG. 7A, FIG. 7B, and FIG. 7C each are a diagram of an example of antenna grouping according to an embodiment of this application. In FIG. 7A to FIG. 7C, 701 to 708 represent eight phase shifters, each "×" represents one antenna (for the phase shifter), and antennas with a same shading are antennas of a same group. In the vertical dimension, a quantity of phase shifters is eight, and a quantity of baseband processing modules is four. In the horizontal dimension, 12 antennas (that is, 1, 2, 3, 4, 5, 6, 7, 8, 9, 10, 11, and 12 in the horizontal dimension) are included, and in the vertical dimension (that is, a baseband channel processing dimension), four antennas (that is, 1, 2, 3, and 4 in the vertical dimension) are included. FIG. 7A shows a case in which M1 consecutive groups of antennas are included in the horizontal dimension, and M2 consecutive groups of antennas are included in the vertical dimension. As shown in FIG. 7A, the antennas include three consecutive groups of antennas (that is, M1=3) in the horizontal dimension, and include two consecutive groups of antennas (M2=2) in the vertical dimension. For the horizontal dimension, (1,2,3,4) is a first group, (5,6,7,8) is a second group, and (9,10,11,12) is a third group; and for the vertical dimension, (1,2) is a first group, and (3,4) is a second group. FIG. 7B shows a case in which M1 interleaved groups of antennas are included in the horizontal dimension, and M2 consecutive groups of antennas are included in the vertical dimension. As shown in FIG. 7B, the antennas include three interleaved groups of antennas (that is, M1=3) in the horizontal dimension, and include two consecutive groups of antennas (M2=2) in the vertical dimension. For the horizontal dimension, (1,4,7,10) is a first group, (2,5,8,11) is a second group, and (3,6,9,12) is a third group; and for the vertical dimension, (1,2) is a first group, and (3,4) is a second group. FIG. 7C shows a case in which M1 interleaved groups of antennas are included in the horizontal dimension, and M2 consecutive groups of antennas are included in the vertical dimension. As shown in FIG. 7C, the antennas include three interleaved groups of antennas (that is, M1=3) in the horizontal dimension, and include two consecutive groups of antennas (M2=2) in the vertical dimension. For the horizontal dimension, (1,2,7,8) is a first group, (3,4,9,10) is a second group, and (5,6,11,12) is a third group; and for the vertical dimension, (1,2) is a first group, and (3,4) is a second group.

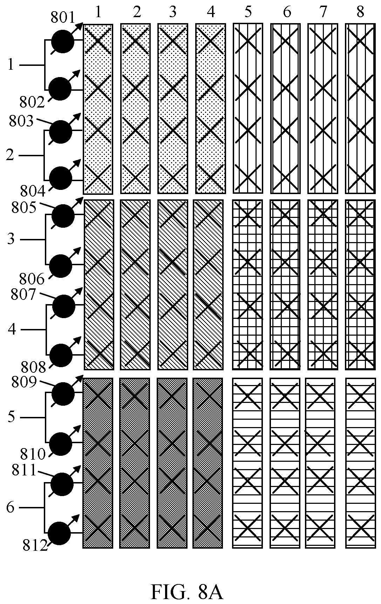

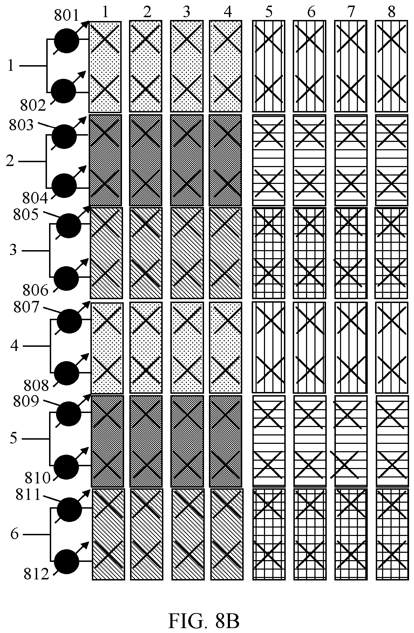

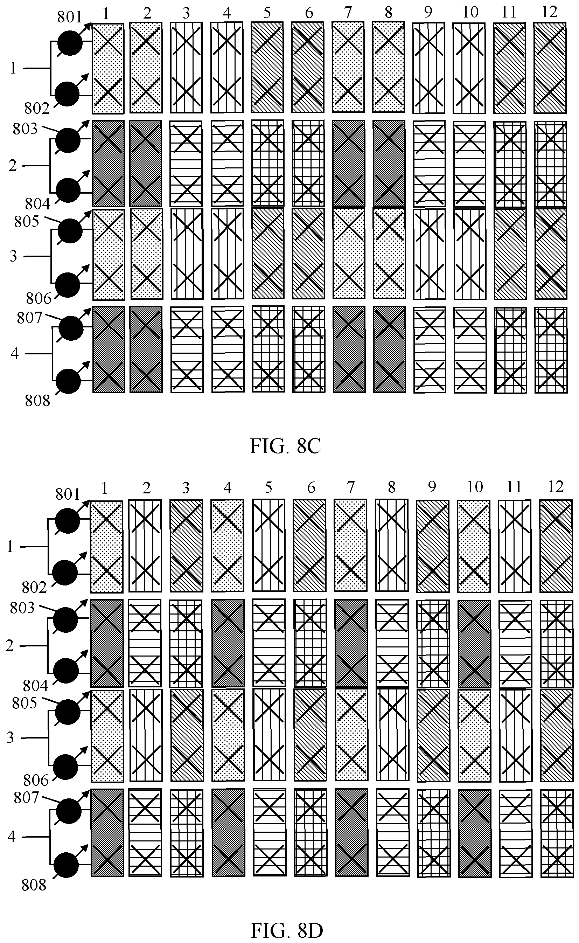

FIG. 8A, FIG. 8B, FIG. 8C, and FIG. 8D each are a diagram of an example of antenna grouping according to an embodiment of this application. In FIG. 8A to FIG. 8D, 801 to 808 represent eight phase shifters, each "×" represents one antenna (for the phase shifter), and antennas with a same shading are antennas of a same group. In the vertical dimension, a quantity of phase shifters is 12, and a quantity of baseband processing modules is six. In the horizontal dimension, eight antennas (that is, 1, 2, 3, 4, 5, 6, 7, and 8 in the horizontal dimension) are included, and in the vertical dimension (that is, a baseband channel processing dimension), six antennas (that is, 1, 2, 3, 4, 5, and 6 in the vertical dimension) are included. FIG. 8A shows a case in which M1 consecutive groups of antennas are included in the horizontal dimension, and M2 consecutive groups of antennas are included in the vertical dimension. As shown in FIG. 8A, the antennas include two consecutive groups of antennas (that is, M1=2) in the horizontal dimension, and include three consecutive groups of antennas (M2=3) in the vertical dimension. For the horizontal dimension, (1,2,3,4) is a first group, and (5,6,7,8) is a second group; and for the vertical dimension, (1,2) is a first group, (3,4) is a second group, and (5,6) is a second group. FIG. 8B shows a case in which M1 consecutive groups of antennas are included in the horizontal dimension, and M2 interleaved groups of antennas are included in the vertical dimension. As shown in FIG. 8B, the antennas include two consecutive groups of antennas (that is, M1=2) in the horizontal dimension, and include three interleaved groups of antennas (M2=3) in the vertical dimension. For the horizontal dimension, (1,2,3,4) is a first group, and (5,6,7,8) is a second group; and for the vertical dimension, (1,4) is a first group, (2,5) is a second group, and (3,6) is a second group. FIG. 8C shows a case in which M1 interleaved groups of antennas are included in the horizontal dimension, and M2 consecutive groups of antennas are included in the vertical dimension. As shown in FIG. 8C, the antennas include three interleaved groups of antennas (that is, M1=3) in the horizontal dimension, and two consecutive interleaved groups of antennas (M2=2) in the vertical dimension. For the horizontal dimension, (1,2,7,8) is a first group, (3,4,9,10) is a second group, and (5,6,11,12) is a third group; and for the vertical dimension, (1,3) is a first group, and (2,4) is a second group. FIG. 8D shows a case in which M1 interleaved groups of antennas are included in the horizontal dimension, and M2 consecutive groups of antennas are included in the vertical dimension. As shown in FIG. 8D, the antennas include three interleaved groups of antennas (that is, M1=3) in the horizontal dimension, and two consecutive interleaved groups of antennas (M2=2) in the vertical dimension. For the horizontal dimension, (1,4,7,11) is a first group, (2,5,8,11) is a second group, and (3,6,9,12) is a third group; for the vertical dimension, (1,3) is a first group, and (2,4) is a second group.

FIG. 6A to FIG. 6D, FIG. 7A to FIG. 7C, and FIG. 8A to FIG. 8D are merely examples of some possible antenna grouping cases provided in this application, and are not all examples. In this application, that a plurality of consecutive groups of antennas are included in the horizontal dimension or the vertical dimension means that each group of antennas in the plurality of groups of antennas is located in one of consecutive areas. Refer to FIG. 6A, FIG. 6C, FIG. 7A, FIG. 7B, FIG. 7C, FIG. 8A, and FIG. 8B. In this application, that a plurality of interleaved groups of antennas are included in the horizontal dimension or the vertical dimension means that one or more groups of antennas in the plurality of groups of antennas are located in two or more different areas. Refer to FIG. 6B, FIG. 6D, FIG. 7B, FIG. 7C, FIG. 8B, FIG. 8C, and FIG. 8D. It should be understood that a quantity of antennas in the horizontal dimension and a quantity of antennas in the vertical dimension are not limited in this application, and a specific form in which a plurality of consecutive groups of antennas or a plurality of interleaved groups of antennas are included in any dimension is not limited. When the plurality of interleaved groups of antennas are included in the horizontal dimension or the vertical dimension, especially when the plurality of interleaved groups of antennas are included in both the horizontal dimension and the vertical dimension, a signal received by each group of antennas may be considered as down-sampling of a signal received by an entire antenna array. Therefore, a signal receiving status of each group of antennas is almost the same as a signal receiving status of the entire antenna array. It should be understood that fewer antenna groups (that is, a quantity of antenna groups) in the entire antenna array indicate that a signal receiving status of each antenna group is closer to a signal receiving status of the entire antenna array; and more antenna groups (that is, a quantity of antenna groups) in the entire antenna array indicate a larger difference between a signal receiving status of each antenna group and a signal receiving status of the entire antenna array, and higher analog beam scanning efficiency. Therefore, in actual application, a grouping request of the antenna array may be configured based on an actual requirement, to meet requirements in different scenarios. Compared with a plurality of interleaved groups of antennas included in a dimension, in a plurality of consecutive groups of antennas included in a dimension, a signal receiving status of each group of antennas differs greatly from a signal receiving status of the entire antenna array, and a hardware circuit is simpler. A grouping manner in which the plurality of consecutive groups of antennas are included in any dimension is applicable to an application scenario that has a lower precision requirement.

The foregoing describes some possible examples of antenna grouping. The following describes, with reference to the accompanying drawings, an array grouping-based communication method provided in this application.

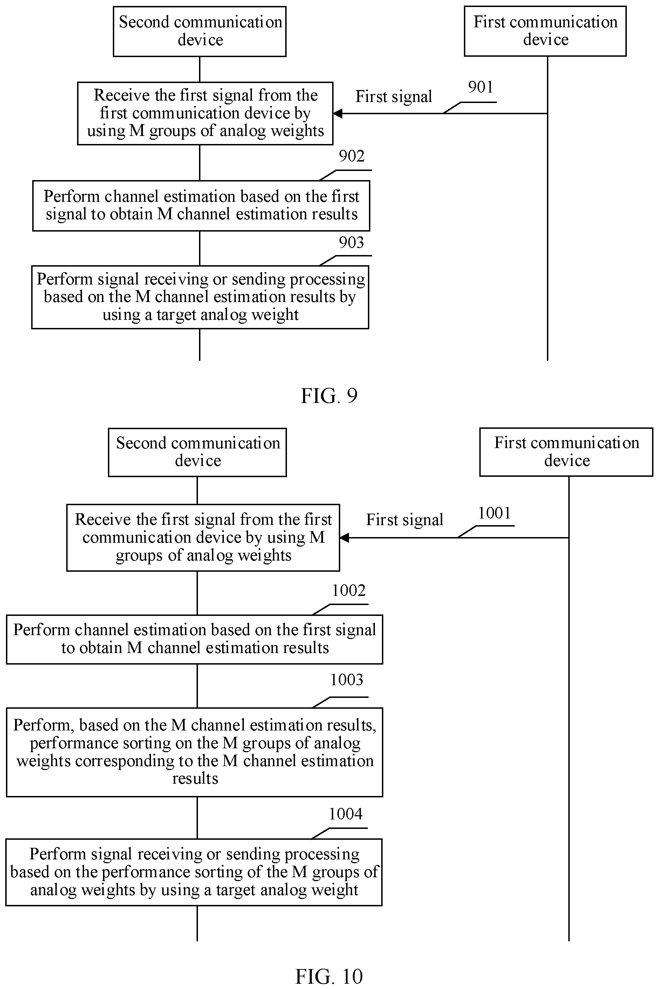

FIG. 9 is an interaction flowchart of an array grouping-based communication method according to an embodiment of this application. As shown in FIG. 9, the method includes the following steps.

901: A second communication device receives a first signal from a first communication device by using M groups of analog weights.

Correspondingly, the first communication device sends the first signal to the second communication device. The second communication device may be the communication apparatus in FIG. 4, and may perform the signal processing procedure in FIG. 5.

At least two groups of analog weights in the M groups of analog weights are different, and M is an integer greater than or equal to 2. For example, any two groups of analog weights in the M groups of analog weights are different. In this application, each group of analog weights includes one or more analog weights. That two groups of analog weights are different means that analog weights included in the two groups of analog weights are not completely the same. In other words, if the two groups of analog weights include completely same analog weights, the two groups of analog weights are the same. For example, both a first group of analog weights and a second group of analog weights include only one analog weight. If the first group of analog weights and the second group of analog weights include a same analog weight, the first group of analog weights and the second group of analog weights are the same; otherwise, the first group of analog weights and the second group of analog weights are different. For example, a first group of analog weights includes an analog weight 1 and an analog weight 2, and a second group of analog weights includes an analog weight 3 and an analog weight 4. If the analog weight 1 is the same as one of the analog weight 3 and the analog weight 4, and the analog weight 2 is the same as the other of the analog weight 3 and the analog weight 4, the first group of analog weights and the second group of analog weights are the same; otherwise, the first group of analog weights and the second group of analog weights are different. For example, the M groups of analog weights correspond to (M1*M2) groups of antennas, and the (M1*M2) groups of antennas are any one of the following: M1 consecutive groups of antennas included in a horizontal dimension and M2 consecutive groups of antennas included in a vertical dimension; M1 consecutive groups of antennas included in a horizontal dimension and M2 interleaved groups of antennas included in a vertical dimension; M1 interleaved groups of antennas included in a horizontal dimension and M2 consecutive groups of antennas included in a vertical dimension; or M1 interleaved groups of antennas included in a horizontal dimension and M2 interleaved groups of antennas included in a vertical dimension. Both M1 and M2 are integers greater than or equal to 1, and (M1*M2) is greater than or equal to M. The (M1*M2) groups of antennas corresponding to the M groups of analog weights may be any one of FIG. 6A to FIG. 6D, FIG. 7A to FIG. 7C, or FIG. 8A to FIG. 8D, or may be another antenna grouping manner. This is not limited in this application. Optionally, (M1*M2) is equal to M, and any two groups of antennas in the (M1*M2) groups of antennas corresponding to the M groups of analog weights correspond to different analog weights. Optionally, (M1*M2) is greater than M, and at least two groups of antennas in the (M1*M2) groups of antennas corresponding to the M groups of analog weights correspond to a same analog weight.

In a possible implementation, the M groups of analog weights are in one-to-one correspondence with M groups of phase shifters. Phase shifters in a same group are synchronously controlled, and phase shifters in different groups are independently controlled. In this implementation, the M groups of analog weights are in one-to-one correspondence with the M groups of phase shifters. The phase shifters in the same group are synchronously controlled, and the phase shifters in the different groups are independently controlled. An analog weight corresponding to each group of phase shifters may be independently configured by independently controlling the phase shifters in the different groups.

In a possible implementation, the M groups of analog weights are in one-to-one correspondence with M groups of phase shifters. Phase shifters in a same group correspond to a same phase, and phase shifters in different groups correspond to different phases. In this implementation, analog weights corresponding to the phase shifters in the different groups may be different, and analog weights corresponding to the phase shifters in the same group may be the same.

In a possible implementation, the second communication device is a terminal device (for example, a mobile phone), the first communication device is an access network device (for example, a base station), and the first signal is a downlink signal. For example, the first signal is a channel state information-reference signal (channel state information-reference signal, CSI-RS), a demodulation reference signal (demodulation reference signal, DRS), or a tracking reference signal (tracking reference signal, TRS).

In a possible implementation, the second communication device is an access network device (for example, a base station), the first communication device is a terminal device (for example, a base station), and the first signal is an uplink signal. For example, the first signal is a sounding reference signal (sounding reference signal, SRS).

902: The second communication device performs channel estimation based on the first signal to obtain M channel estimation results.

The M channel estimation results are in one-to-one correspondence with the M groups of analog weights. The M groups of analog weights include a first group of analog weights, a second group of analog weights, ..., an $m^{th}$ group of analog weights, ..., and an $M^{th}$ group of analog weights. The $m^{th}$ group of analog weights in the M groups of analog weights may be represented by $W_m$, where m is an integer greater than 0, and m is less than or equal to M. That the second communication device performs channel estimation based on the first signal to obtain M channel estimation results may be: The second communication device performs channel estimation based on a signal obtained by receiving the first signal from the first communication device by using each group of the M groups of analog weights, to obtain the M channel estimation results. In a possible implementation, the second communication device receives the first signal from the first communication device by using each group of analog weights $W_m$, and performs channel estimation based on the signal received by using each group of analog weights $W_m$. The channel estimation result obtained by the second communication device by performing channel estimation based on the signal received by using the $m^{th}$ group of analog weights $W_m$ may be represented by $H_{m,Wm}$. The M channel estimation results may include $H_{1,W1}$, $H_{2,W2}$, ..., $H_{m,W_m}$, ..., and $H_{M,W_M}$. In this application, a channel estimation (or channel sounding) method includes but is not limited to a least squares (least squares, LS) estimation manner, a minimum mean square error (minimum mean square error, MMSE) estimation manner, and the like. The LS channel estimation is used as an example. In a channel estimation process, a received signal is multiplied by a conjugate of a pilot signal, to obtain a channel response matrix, that is, a channel estimation result.

903: The first communication device performs signal receiving or sending processing based on the M channel estimation results by using a target analog weight.

The target analog weight is obtained based on the M groups of analog weights. Refer to FIG. 5. Step 901 and step 902 correspond to the sounding pilot branch in FIG. 5, and step 903 corresponds to the service data branch in FIG. 5. It should be understood that, the second communication apparatus may first determine, by performing the method procedure in FIG. 9, a to-be-used target analog weight for performing signal receiving or sending processing, and then use the target analog weight to perform signal receiving or sending processing. Step 901 and step 902 are an analog beam scanning process (or referred to as an analog weighting process). The second communication device may quickly implement analog beam scanning by performing step 901 and step 902. This reduces time overheads. The target analog weight may be an analog weight that is determined by the second communication device and that is suitable for currently performing signal receiving or sending processing. Signal receiving or sending processing performed by using the target analog weight can ensure precision of analog beam scanning, or even quantization precision of the analog weight.

In a possible implementation, the target analog weight is one of the M groups of analog weights.

In a possible implementation, the target analog weight is one group in weight codebooks, and the M groups of analog weights are included in the weight codebooks.

In a possible implementation, the M channel estimation results are channel estimation results obtained by assuming that the first signal is not processed by the phase shifters corresponding to the M groups of analog weights.

In this embodiment of this application, compared with receiving a signal from the first communication device by using each group of the M groups of analog weights in sequence, receiving the first signal from the first communication device by using the M groups of analog weights can speed up analog beam scanning, reduce scanning resource overheads, and improve uplink and downlink cell capacities of a mobile communication network.

FIG. 10 is an interaction flowchart of another array grouping-based communication method according to an embodiment of this application. The method interaction procedure in FIG. 10 is a possible implementation of the method described in FIG. 9. In this implementation, the second communication device selects (determines) the to-be-used analog weight for performing signal receiving or sending processing from the M groups of analog weights, so that a currently to-be-used analog weight can be quickly determined, and few operations are performed. As shown in FIG. 10, the method includes the following steps.

1001: The second communication device receives the first signal from the first communication device by using the M groups of analog weights.

Correspondingly, the first communication device sends the first signal to the second communication device. For step 1001, refer to step 901.

1002: The second communication device performs channel estimation based on the first signal to obtain the M channel estimation results.

For step 1002, refer to step 902. A possible implementation of step 1002 is as follows. The first signal is received from the first communication device by using each group of the M groups of analog weights, and channel estimation is performed based on the signal received by using each group of analog weights, to obtain the M channel estimation results. The M groups of analog weights are in one-to-one correspondence with the M channel estimation results. In other words, one group of analog weights corresponds to one channel estimation result. The channel estimation result obtained by the second communication device by performing channel estimation based on the signal received by using the $m^{th}$ group of analog weights $W_m$ may be represented by $H_{m,W_m}$.

1003: The second communication device performs, based on the M channel estimation results, performance sorting on the M groups of analog weights corresponding to the M channel estimation results.

Step 1003 may be understood as follows: Performance of the analog weights is identified based on the channel estimation results. A solution for identifying the analog weight from optimal to inferior includes but is not limited to sorting in descending order of reference signal power (reference signal received power, RSRP), sorting in descending order of signal to interference plus noise ratio (signal to interference plus noise ratio, SINR), and the like. A manner of calculating the RSRP includes but is not limited to calculating power (norm) of $H_{m,W_m}$, and calculation of the SINR includes but is not limited to a ratio of the RSRP to noise power, and the like. An index of a good (for example, an optimal) analog weight finally identified is represented by $k_{opt}$. In this application, the good analog weight in M analog weights is any one of the first F analog weights in the performance sorting, where F is an integer less than M. Optionally, F is 1. In this way, precision of analog beam scanning is high.

1004: The second communication device performs signal receiving or sending processing based on the performance sorting of the M groups of analog weights by using the target analog weight.

The performance sorting of the M groups of analog weights is obtained by the second communication device by performing step 1002. The target analog weight may be the good analog weight in the M groups of analog weights, for example, an optimal analog weight.

The channel estimation result obtained by the second communication device by performing channel estimation based on the signal received by using the $m^{th}$ group of analog weights $W_m$ may be represented by $H_{m,W_m}$. The M channel estimation results may include $H_{1,W_1}, H_{2,W_2}, ..., H_{m,W_m}, ...,$ and $H_{M,W_M}$. In a possible implementation, after obtaining the M channel estimation results, the second communication device may determine an index of an optimal analog weight by using the following formula:

$$k_{opt} = \max_m f_x(H_{m,W_m}) \ \text{ or } \ k_{opt} = \min_m f_x(H_{m,W_m}) \ (1)$$

$f_x$ represents a function relationship, and includes but is not limited to:

$$f_x = C * \left| H_{m,W_m} \right|^s \ (2)$$

C may represent a positive decimal, a negative decimal, or a channel parameter such as noise power, and s includes but is not limited to an integer like 2, -2, 1, or -1. It should be understood that when C is a positive number, $k_{opt} = \max_m f_x(H_{m,W_m})$; and when C is a negative number, $k_{opt} = \min_m f_x(H_{m,W_m})$. The performance sorting of the groups of analog weights may be determined by using the formula (1) and the formula (2), and then signal receiving or sending processing is performed by using the target analog weight (for example, an optimal analog weight).

The RSRP sorting is used as an example. The second communication device determines the index of the optimal analog weight by using the following formula:

$$k_{opt} = \max_m \left| H_{m,W_m} \right|^2 \ (3)$$

A value of m ranges from 1 to M.

Step 1104 may be understood as follows: The second communication device performs receiving/sending processing on an uplink or downlink service data channel at a next moment by using the good target analog weight based on an identification condition of the analog weight.

In this embodiment of this application, the second communication device performs signal receiving or sending processing based on the performance sorting of the M groups of analog weights by using the target analog weight, so that the currently to-be-used analog weight can be quickly determined, and few operations are performed.

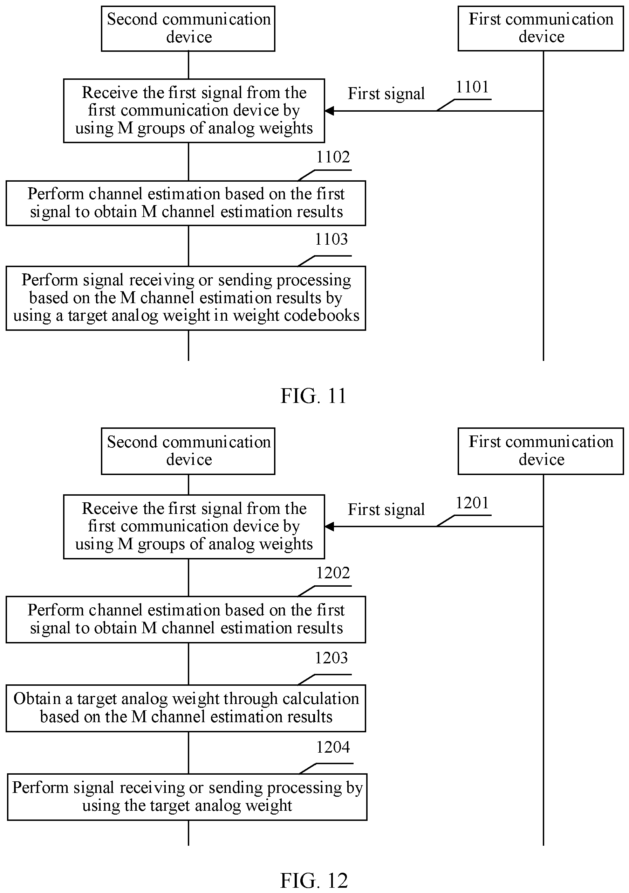

FIG. 11 is an interaction flowchart of another array grouping-based communication method according to an embodiment of this application. The method interaction procedure in FIG. 11 is a possible implementation of the method described in FIG. 9. In this implementation, the second communication device selects (determines) a to-be-used analog weight for performing signal receiving or sending processing from the weight codebooks. In comparison with selecting the analog weight used for currently performing signal receiving or sending processing from the M groups of analog weights, an analog weight that is more suitable for currently performing signal receiving or sending processing may be obtained, and precision of beam sounding can be improved. As shown in FIG. 11, the method includes the following steps.

1101: The second communication device receives the first signal from the first communication device by using the M groups of analog weights.

Correspondingly, the first communication device sends the first signal to the second communication device. For step 1101, refer to step 901.

1102: The second communication device performs channel estimation based on the first signal to obtain the M channel estimation results.

The M channel estimation results are channel estimation results obtained by assuming that the first signal is not processed by the phase shifters corresponding to the M groups of analog weights. The M groups of analog weights are in one-to-one correspondence with the M groups of phase shifters. The M channel estimation results may include $H_1$, $H_2$, $H_m$, ..., and $H_M$, where $H_1$ represents a channel estimation result corresponding to a first group of phase shifters in the M groups of phase shifters, $H_m$ represents a channel estimation result corresponding to an $m^{th}$ group of phase shifters in the M groups of phase shifters, and so on. For example, $H_1$ represents a phase shifter-level channel response matrix corresponding to the first group of phase shifters in the M groups of phase shifters, $H_m$ represents a phase shifter-level channel response matrix corresponding to the $m^{th}$ group of phase shifters in the M groups of phase shifters, and so on. In this example, step 1102 may be understood as follows: Phase shifter-level channel reconstruction is implemented based on a channel estimation result of each group of analog weights, in other words, $H_1$, $H_2$, ..., $H_m$, ..., and $H_M$ are obtained.

The following describes a possible implementation of step 1102 by using an example in which channel estimation is performed based on the first signal to obtain $H_m$.

An example in which the second communication device performs channel estimation based on the first signal to obtain $H_m$ is as follows.

(1) The second communication device estimates a phase difference $\alpha_{k,m}$ between $H_m$ and $H_k$ based on angle location information of the second communication device.

$H_m$ represents a channel estimation result corresponding to the $m^{th}$ group of phase shifters in the M groups of phase shifters, and $H_k$ represents a channel estimation result corresponding to a $k^{th}$ group of phase shifters in the M groups of phase shifters, where both m and k are integers greater than 0 and less than M. The angle location information may include a zenith angle of arrival (zenith angle of arrival, ZoA) and/or an angle of arrival (angle of arrival, AoA) corresponding to the second communication device. A manner of estimating the phase difference between $H_m$ and $H_k$ may be obtained by using a classic method of direction of arrival estimation (direction of arrival, DoA), for example, multiple signal classification (multiple signal classification, MUSIC). The DoA is a direction of arrival of a spatial signal (a direction angle of arrival of each signal at an array reference element, referred to as a direction of arrival for short). A basic principle of the MUSIC algorithm is to perform eigen decomposition on a covariance matrix of array output data to obtain a signal subspace corresponding to a signal component and a noise subspace orthogonal to the signal component, and then estimate an incident direction of the signal through orthogonality of the two subspaces. It should be understood that the second communication device may estimate a phase difference between any two channel estimation results based on the angle location information of the second communication device. A relationship between $H_m$ and $H_k$ may be represented by using the following formula:

$$H_m = H_k \alpha_{k,m} \quad (4)$$

$\alpha_{k,m}$ represents a phase difference between $H_m$ and $H_k$.

In a possible implementation, the second communication device may obtain, by performing step 1102, a channel response matrix $H_{k,W_k}$ (a channel estimation result) obtained after analog weighting processing. A process of analog weighting may be described by using the following formula:

$$H_{k,W_k} = W_k H_k \quad (5)$$

$W_k$ represents an analog weight/analog beam in an $(N_{BB} \times N_{PS})$ dimension, $W_k$ represents the $k^{th}$ group of analog weights in the M groups of analog weights, $H_{k,W_k}$ represents a baseband processing-level channel response matrix in an $N_{BB}$ dimension, and $H_{k,W_k}$ represents a channel estimation result corresponding to the $k^{th}$ group of analog weights in the M groups of analog weights in the M channel estimation results. In other words, $H_{k,W_k}$ represents a channel response matrix corresponding to the $k^{th}$ group of analog weights in the M groups of analog weights. $N_{BB}$ represents a space domain/antenna domain/beam domain dimension of baseband processing, and $N_{PS}$ represents a space domain/antenna domain/beam domain dimension of phase shifter processing. In this application, "/" represents or.

With reference to the foregoing formula (4) and formula (5), a channel model relationship may be obtained:

$$H_{k,W_k} \alpha_{k,m} = W_k H_k * \alpha_{k,m} = W_k * H_m \quad (6)$$

$H_{m,w_k} = W_k * H_m$ is defined as a new variable, and represents a channel matrix in which $H_m$ (that is, the phase shifter-level channel response matrix corresponding to the $m^{th}$ group of phase shifters) is processed by using $W_k$ (the $k^{th}$ group of analog weights) (a channel matrix coefficient may be obtained through solution and estimation).

(2) The second communication device estimates, based on the estimated phase difference $\alpha_{k,m}$ between $H_m$ and $H_k$, channel response matrices $H_{m,w1}$, $H_{m,w2}$, ... $H_{m,wM}$ in which $H_m$ is processed by using analog weights $W_1$, $W_2$, ..., and $W_M$.

$W_1$ represents the first group of analog weights in the M groups of analog weights, $W_2$ represents the second group of analog weights in the M groups of analog weights, and $W_M$ represents the $M^{th}$ group of analog weights in the M groups of analog weights. $H_{m,w_1}$ represents a channel response matrix in which $H_m$ is processed by using the analog weight $W_1$, $H_{m,w_2}$ represents a channel response matrix in which $H_m$ is processed by using the analog weight $W_2$, and $H_{m,wM}$ represents a channel response matrix in which $H_m$ is processed by using the analog weight $W_M$. The second communication device may obtain $H_{m,W_k}$ through calculation by substituting $H_{k,W_k}$ and $\alpha_{k,m}$ into formula (6). It should be understood that, the second communication device may estimate, in a similar manner, the channel response matrices $H_{m,w_1}$, $H_{m,w_2}$, ... $H_{m,wM}$ in which $H_m$ is processed by using the analog weights $W_1$, $W_2$, ..., and $W_M$.

(3) The second communication device obtains, based on $H_{m,w_1}$, $H_{m,w_2}$, ... $H_{m,wM}$, a channel response $H_M' = [H_{m,w_1}; H_{m,w_2}$ ... $H_{m,wM}]$ after processed by using the analog weight.

(4) The second communication device obtains $H_m$ based on $H_M'$ and an analog weight matrix $W_M$.

The analog weight matrix $W_M = [W_1; W_2 ... W_M]$. $W_M$ is a matrix whose dimension is $(M * N_{BB}) \times N_{PS}$. A channel response matrix model corresponding to $H_M'$, $W_M$, and $H_m$ satisfies the following formula:

$$H_M{}' = W_M \times H_m \quad (7)$$

A manner in which the second communication device obtains $H_m$ based on $H_M'$ and the analog weight matrix $W_M$ includes but is not limited to the LS estimation and the MMSE estimation. The LS estimation method is used as an example. A possible formula for calculating, by the second communication device, $H_m$ based on $H_M'$ and the analog weight matrix $W_M$ is as follows:

$$H_m = (W_M + D)^{-1} H_M{}' \quad (8)$$

$D$ represents a loading matrix, and includes but is not limited to an identity matrix, a diagonal matrix, and the like. Formula (8) may be replaced with $H_m = W_M^{-1} H_M{}'$. Similarly, the second communication device may obtain $H_1, H_2, ...,$ and $H_M$ in a manner similar to obtaining $H_m$. $H_m$ may be considered as a reconstructed channel response matrix of the $m^{th}$ group of phase shifters. It should be understood that the second communication device may reconstruct the channel response matrix of each group of phase shifters in a similar manner.

1103: The second communication device performs signal receiving or sending processing based on the M channel estimation results by using the target analog weight in the weight codebooks.

The target analog weight is obtained based on the M groups of analog weights. The target analog weight is one group of analog weights in the weight codebooks, and the M groups of analog weights are included in the weight codebooks.

Step 1103 may be understood as follows: The second communication device performs signal receiving or sending processing based on the M channel estimation results by using a good target analog weight in the weight codebooks. For example, the second communication device calculates an index $k_{opt}$ of an optimal analog weight in the weight codebooks based on the M channel estimation results, and uses the optimal analog weight (that is, the target analog weight) to perform receiving/sending processing on an uplink or downlink service data channel at a next moment. A method for obtaining the index of the optimal analog weight in the weight codebooks of the second communication device includes but is not limited to using a combination of $H_m$ and each analog weight $W_k$ to separately detect a maximum measurement amount like RSRP, SINR, or correlation thereof as a metric of the optimal analog weight. $H_{m,w_k}$ may be obtained by using the combination of each analog weight $W_k$ in the weight codebooks and $H_m$. The second communication device may calculate the index $k_{opt}$ of the optimal analog weight in the weight codebooks based on the M channel estimation results by using the following formula:

$$k_{opt} = \max_k f_x(H_{m,W_m}) \ \text{ or } \ k_{opt} = \min_k f_x(H_{m,W_m}) \quad (9)$$

$f_x$ represents a function relationship, and includes but is not limited to:

$$f_x = C * \sum_m \left| H_{m,W_k} \right|^s \quad (10)$$

C may represent a positive decimal or a negative decimal, or a channel parameter such as noise power, a range of a summation item includes but is not limited to some or all index ranges from 1 to M, and s includes but is not limited to an integer like 2, -2, 1, or -1.

In a possible implementation, the second communication device determines the index of the optimal analog weight by using the following formula:

$$k_{opt} = \max_m |H_{m,W_k}|^2 \quad (11)$$

$W_k$ is the analog weight in the weight codebooks. The second communication device may obtain $H_{m,w_k}$ by using the combination of each analog weight $W_k$ in the weight codebooks and $H_m$.

In this embodiment of this application, the second communication device selects (determines) the to-be-used analog weight for performing signal receiving or sending processing from the weight codebooks. In comparison with selecting the analog weight used for currently performing signal receiving or sending processing from the foregoing M groups of analog weights, the analog weight that is more suitable for currently performing signal receiving or sending processing may be obtained, and precision of beam sounding can be improved.

FIG. 12 is an interaction flowchart of another array grouping-based communication method according to an embodiment of this application. The method interaction procedure in FIG. 12 is a possible implementation of the method described in FIG. 9. In this implementation, the second communication device calculates the to-be-used analog weight for performing signal receiving or sending processing, instead of selecting the to-be-used analog weight from the existing weight codebooks or an analog weight set, so that the analog weight (that is, a more precise analog weight) that is more suitable for currently performing signal receiving or sending processing may be obtained, and precision of beam sounding and quantization precision of the analog weight can be improved. As shown in FIG. 12, the method includes the following steps.

1201: The second communication device receives the first signal from the first communication device by using the M groups of analog weights.

Correspondingly, the first communication device sends the first signal to the second communication device. For step 1101, refer to step 901.

1202: The second communication device performs channel estimation based on the first signal to obtain the M channel estimation results.

For step 1202, refer to step 1102. The M channel estimation results may include $H_1, H_2, H_m, ..., $ and $H_M$, where $H_1$ represents a channel estimation result corresponding to a first group of phase shifters in the M groups of phase shifters, $H_m$ represents a channel estimation result corresponding to an $m^{th}$ group of phase shifters in the M groups of phase shifters, and so on.

1203: The second communication device obtains the target analog weight through calculation based on the M channel estimation results.

An example in which the second communication device obtains the target analog weight through calculation based on the M channel estimation results is as follows.

(1) The second communication device performs inter-group combination based on the M channel estimation results to obtain a channel response matrix $H_{ps}$, where $H_{ps} = [H_1, H_2, ... H_M]$.
(2) The second communication device performs matrix decomposition based on $H_{ps}$, and constructs the target analog weight based on an obtained eigenvector.

A possible implementation in which the second communication device performs the matrix decomposition based on $H_{ps}$ is as follows. The second communication device performs singular value decomposition (singular value decomposition, SVD) on $H_{ps}$ by using the following formula:

$$[u, s, v] = SVD(H_{ps}H_{ps}^H) \quad (12)$$

A row of $H_{ps}$ is equal to a quantity $N_{moni}$ of phase shifters in the second communication device. The second communication device may set the row of $H_{ps}$ based on the quantity of phase shifters used by the second communication device.

A possible implementation in which the second communication device performs the matrix decomposition based on $H_{ps}$ is as follows. The second communication device performs eigenvalue decomposition on $H_{ps}$ by using the following formula:

$$[u, s] = EVD(H_{ps}H_{ps}^H) \quad (13)$$

A row of $H_{ps}$ is equal to a quantity of phase shifters in the second communication device.

(3) The second communication device uses a first eigenvector of u to form a vector $u_{opt}$ of $N_{moni}$ * 1, and splices $u_{opt}$ into a target analog weight $W_{opt}$ of ($N_{BB}$ * $N_{ps}$) in the following manner:

$$W_{opt} = \begin{bmatrix} u_{opt}^T & 0 & 0 \\ 0 & ... & 0 \\ 0 & 0 & u_{opt}^T \end{bmatrix} \quad (14)$$

$W_{opt}$ represents the target analog weight obtained through calculation. Precision of the target analog weight is higher than that of the analog weight in the weight codebooks. In other words, the second communication device may obtain, through calculation based on the M channel estimation results, a target analog weight with higher precision, and perform signal receiving or sending processing by using the target analog weight, so that quantization precision of the phase shifter can be improved, and uplink coverage performance of a system can be provided.

1204: The second communication device performs signal receiving or sending processing by using the target analog weight.

In this embodiment of this application, a division design in which antenna array planes are grouped (divided into M groups) is to complete analog beam measurement and optimization at a time, so that resource overheads of analog beam scanning can be reduced, and uplink and downlink cell capacities of a mobile communication network can be improved. In addition, because the second communication device may obtain, through calculation based on the M channel estimation results, the target analog weight with higher precision, and perform signal receiving or sending processing by using the target analog weight, so that the quantization precision of the phase shifter can be improved, and the uplink and downlink coverage performance of the system can be improved.

The following describes, with reference to the accompanying drawings, a structure of a communication apparatus that can implement the array grouping-based communication method provided in embodiments of this application.

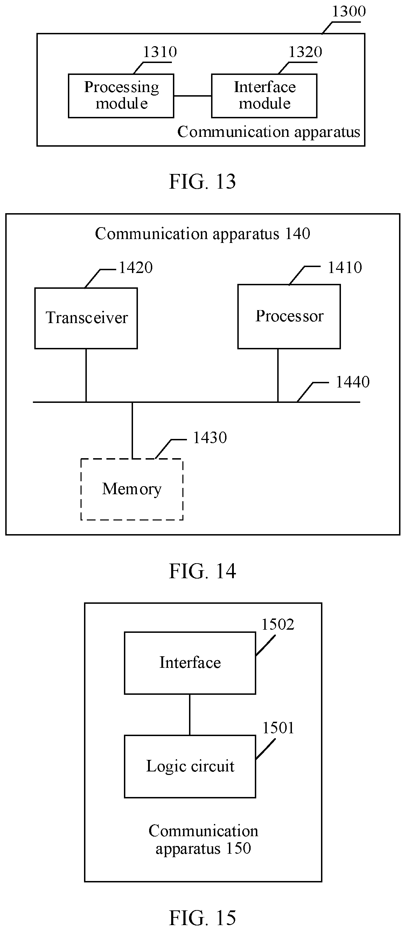

FIG. 13 is a diagram of a structure of a communication apparatus 1300 according to an embodiment of this application. The communication apparatus 1300 may correspondingly implement functions or steps implemented by the first communication device in the foregoing method embodiments. The communication apparatus may include a processing module 1310 and an interface module 1320. Optionally, a storage unit may be further included. The storage unit may be configured to store instructions (code or a program) and/or data. The processing module 1310 and the interface module 1320 may be coupled to the storage unit. For example, the processing module 1310 may read the instructions (the code or the program) and/or the data in the storage unit, to implement a corresponding method. The units may be independently disposed, or may be partially or completely integrated. For example, the interface module 1320 may include a sending module and a receiving module. The sending module may be a transmitter, and the receiving module may be a receiver. An entity corresponding to the interface module 1320 may be a transceiver, a communication interface, or an antenna module. Optionally, refer to FIG. 4, the communication apparatus 1300 may further include a BBU, an RRU, and an antenna module.

In some possible implementations, the communication apparatus 1300 can correspondingly implement behavior and functions of the second communication device in the foregoing method embodiments. For example, the communication apparatus 1300 may be the second communication device, or may be a component (for example, a chip or a circuit) used in the second communication device. For example, the interface module 1320 may be configured to perform all receiving or sending operations performed by the second communication device in the embodiments shown in FIG. 9, FIG. 10, FIG. 11, and FIG. 12, for example, step 901 in the embodiment shown in FIG. 9, step 1001 in the embodiment shown in FIG. 10, step 1101 in the embodiment shown in FIG. 11, step 1201 in the embodiment shown in FIG. 12, and/or another process used to support the technology described in this specification. The processing module 1310 is configured to perform all operations, except receiving and sending operations, performed by the second communication device in the embodiments shown in FIG. 9, FIG. 10, FIG. 11, and FIG. 12, for example, step 902 and step 903 in the embodiment shown in FIG. 9, step 1002, step 1003, and step 1004 in the embodiment shown in FIG. 10, step 1102 and step 1103 in the embodiment shown in FIG. 11, and step 1202, step 1203, and step 1204 in the embodiment shown in FIG. 12.

FIG. 14 is a diagram of a structure of another communication apparatus 140 according to an embodiment of this application. The communication apparatus in FIG. 14 may be the foregoing second communication device.

As shown in FIG. 14, the communication apparatus 140 includes at least one processor 1410 and a transceiver 1420.

In some other embodiments of this application, the processor 1410 and the transceiver 1420 may be configured to perform functions, operations, or the like performed by the second communication device. For example, the processor 1410 may perform one or more of the following operations: step 902 and step 903 in the embodiment shown in FIG. 9, step 1002, step 1003, and step 1004 in the embodiment shown in FIG. 10, step 1102 and step 1103 in the embodiment shown in FIG. 11, and step 1202, step 1203, and step 1204 in the embodiment shown in FIG. 12. For example, the transceiver 1420 may perform one or more of the following operations: step 901 in the embodiment shown in FIG. 9, step 1001 in the embodiment shown in FIG. 10, step 1101 in the embodiment shown in FIG. 11, and step 1201 in the embodiment shown in FIG. 12.

The transceiver 1420 is configured to communicate with another device/apparatus by using a transmission medium. The processor 1410 receives and sends data and/or signaling through the transceiver 1420, and is configured to implement the method in the foregoing method embodiments. The processor 1410 may implement the function of the processing module 1310, and the transceiver 1420 may implement the function of the interface module 1320.

Optionally, the communication apparatus 140 may further include at least one memory 1430, configured to store program instructions and/or data. The memory 1430 is coupled to the processor 1410. Couplings in this embodiment of this application are indirect couplings or communication connections between apparatuses, units, or modules for information exchange between the apparatuses, the units, or the modules, and may in electrical, mechanical, or in another form. The processor 1410 may perform an operation with the memory 1430 cooperatively. The processor 1410 may execute the program instructions stored in the memory 1430. At least one of the at least one memory may be included in the processor.

Optionally, the communication apparatus 140 further includes a BBU, an RRU, and an antenna module. The antenna module may be deployed in the transceiver.

A specific connection medium between the transceiver 1420, the processor 1410, and the memory 1430 is not limited in this embodiment of this application. In this embodiment of this application, the memory 1430, the processor 1410, and the transceiver 1420 are connected through a bus 1440 in FIG. 14. The bus is represented by using a bold line in FIG. 14. A manner of connection between other components is merely an example for description, and is not limited thereto. The bus may be classified into an address bus, a data bus, a control bus, and the like. For ease of representation, the bus is represented by using only one bold line in FIG. 14, but this does not mean that there is only one bus or one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this embodiment of this application. The general-purpose processor may be a microprocessor, any conventional processor, or the like. The steps in the methods disclosed with reference to embodiments of this application may be directly performed and completed by a hardware processor, or may be performed and completed by using a combination of hardware in the processor and a software module.

FIG. 15 is a diagram of a structure of another communication apparatus 150 according to an embodiment of this application. As shown in FIG. 15, the communication apparatus shown in FIG. 15 includes a logic circuit 1501 and an interface 1502. The processing module 1310 in FIG. 13 may be implemented by using the logic circuit 1501, and the interface module 1320 in FIG. 13 may be implemented by using the interface 1502. The logic circuit 1501 may be a chip, a processing circuit, an integrated circuit, a system-on-chip (system-on-chip, SoC), or the like, and the interface 1502 may be a communication interface, an input/output interface, or the like. In this embodiment of this application, the logic circuit and the interface may be further coupled to each other. A specific manner of connection between the logical circuit and the interface is not limited in this embodiment of this application.

In some embodiments of this application, the logic circuit and the interface may be configured to perform functions, operations, or the like performed by the second communication device.

This application further provides a computer-readable storage medium. The computer-readable storage medium stores a computer program or instructions. When the computer program or the instructions are run on a computer, the computer is enabled to perform the method in the foregoing embodiments.

This application further provides a computer program product. The computer program product includes instructions or a computer program. When the instructions or the computer program is run on a computer, the communication method in the foregoing embodiments is performed.

This application further provides a communication system, including the foregoing first communication device and the foregoing second communication device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An array grouping-based communication method, comprising:

   receiving a first signal from a first communication device by using M groups of analog weights, wherein at least two groups of analog weights in the M groups of analog weights are different, and M is an integer greater than or equal to 2;
   performing channel estimation based on the first signal to obtain M channel estimation results, wherein the M channel estimation results are in one-to-one correspondence with the M groups of analog weights; and
   performing signal receiving or sending processing based on the M channel estimation results by using a target analog weight, wherein the target analog weight is obtained based on the M groups of analog weights.

2. The method according to claim 1, wherein the M groups of analog weights are in one-to-one correspondence with M groups of phase shifters, phase shifters in a same group are synchronously controlled, and phase shifters in different groups are independently controlled.

3. The method according to claim 1, wherein the M groups of analog weights are in one-to-one correspondence with M groups of phase shifters, phase shifters in a same group correspond to a same phase, and phase shifters in different groups correspond to different phases.

4. The method according to any one of claims 1 to 3, wherein the M groups of analog weights correspond to (M1*M2) groups of antennas, and the (M1*M2) groups of antennas are any one of the following: M1 consecutive groups of antennas comprised in a horizontal dimension and M2 consecutive groups of antennas comprised in a vertical dimension; M1 consecutive groups of antennas comprised in a horizontal dimension and M2 interleaved groups of antennas comprised in a vertical dimension; M1 interleaved groups of antennas comprised in a horizontal dimension and M2 consecutive groups of antennas comprised in a vertical dimension; or M1 interleaved groups of antennas comprised in a horizontal dimension and M2 interleaved groups of antennas comprised in a vertical dimension, wherein both M1 and M2 are integers greater than or equal to 1, and (M1*M2) is greater than or equal to M.

5. The method according to any one of claims 1 to 4, wherein the target analog weight is one of the M groups of analog weights.

6. The method according to any one of claims 1 to 4, wherein the target analog weight is one group in weight codebooks, and the M groups of analog weights are comprised in the weight codebooks.

7. The method according to any one of claims 1 to 6, wherein the M channel estimation results are channel estimation results based on an assumption that the first signal is not processed by the phase shifters corresponding to the M groups of analog weights.

8. The method according to any one of claims 1 to 7, wherein the method is applied to a terminal device or an apparatus in the terminal device, the first signal is a downlink signal, and the first communication device is an access network device.

9. The method according to any one of claims 1 to 7, wherein the method is applied to an access network device or an apparatus in the access network device, the first signal is an uplink signal, and the first communication device is a terminal device.

10. A communication apparatus, comprising:

    an interface module, configured to receive a first signal from a first communication device by using M groups of analog weights, wherein at least two groups of analog weights in the M groups of analog weights are different, and M is an integer greater than or equal to 2; and
    a processing module, configured to perform channel estimation based on the first signal to obtain M channel estimation results, wherein the M channel estimation results are in one-to-one correspondence with the M groups of analog weights, wherein
    the processing module is configured to control, based on the M channel estimation results, the interface module to perform signal receiving or sending processing by using a target analog weight, wherein the target analog weight is obtained based on the M groups of analog weights.

11. The apparatus according to claim 10, wherein the M groups of analog weights are in one-to-one correspondence with M groups of phase shifters, phase shifters in a same group are synchronously controlled, and phase shifters in different groups are independently controlled.

12. The apparatus according to claim 10, wherein the M groups of analog weights are in one-to-one correspondence with M groups of phase shifters, phase shifters in a same group correspond to a same phase, and phase shifters in different groups correspond to different phases.

13. The apparatus according to any one of claims 10 to 12, wherein the M groups of analog weights correspond to (M1*M2) groups of antennas, and the (M1*M2) groups of antennas are any one of the following: M1 consecutive groups of antennas comprised in a horizontal dimension and M2 consecutive groups of antennas comprised in a vertical dimension; M1 consecutive groups of antennas comprised in a horizontal dimension and M2 interleaved groups of antennas comprised in a vertical dimension; M1 interleaved groups of antennas comprised in a horizontal dimension and M2 consecutive groups of antennas comprised in a vertical dimension; or M1 interleaved groups of antennas comprised in a horizontal dimension and M2 interleaved groups of antennas comprised in a vertical dimension, wherein both M1 and M2 are integers greater than or equal to 1, and (M1*M2) is greater than or equal to M.

14. The apparatus according to any one of claims 10 to 13, wherein the target analog weight is one of the M groups of analog weights.

15. The apparatus according to any one of claims 10 to 13, wherein the target analog weight is one group in weight codebooks, and the M groups of analog weights are comprised in the weight codebooks.

16. The apparatus according to any one of claims 10 to 14, wherein the M channel estimation results are channel estimation results obtained by assuming that the first signal is not processed by the phase shifters corresponding to the M groups of analog weights.

17. The apparatus according to any one of claims 10 to 15, wherein the communication apparatus is a terminal device or an apparatus in the terminal device, and the first signal is a downlink signal.

18. The apparatus according to any one of claims 10 to 15, wherein the communication apparatus is an access network device or an apparatus in the access network device, and the first signal is an uplink signal.

19. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 9.

20. A computer-readable storage medium, wherein the computer-readable storage medium stores a computer program, the computer program comprises program instructions, and when the program instructions are executed, a computer is enabled to perform the method according to any one of claims 1 to 9.

21. A computer program product, wherein the computer program product comprises a computer program, the computer program comprises program instructions, and when the program instructions are executed, a computer is enabled to perform the method according to any one of claims 1 to 9.

FIG. 1

FIG. 2

FIG. 3

FIG. 4

501

| RRU | BBU |
|---|---|
| Load different analog weights to antenna signals received by different groups of antennas, to obtain a plurality of groups of analog weighted signals (analog weighting process) | Convert the analog weighted signals into digital signals through AD sampling and perform channel estimation |

A terminal device sends a signal: a pilot signal → Antenna signal processing →

Access network device

Determine a to-be-used analog weight for performing signal sending or receiving processing through a channel estimation process

502

| RRU | BBU |
|---|---|
| Apply the determined analog weight to a phase corresponding to a phase shifter | |
| Load the analog weight determined in a sounding pilot branch (analog weighting process) to the received data signal | Convert the analog weighted signals into the digital signals through AD sampling and perform digital weighting |

The terminal device sends a signal: a data signal ↔ Antenna signal processing ↔

Access network device

FIG. 5

FIG. 6A

FIG. 6B

FIG. 6C

FIG. 6D

FIG. 7A

FIG. 7B

FIG. 7C

FIG. 8A

FIG. 8B

FIG. 8C

FIG. 8D

Second communication device

First communication device

Receive the first signal from the first communication device by using M groups of analog weights

First signal 901

902

Perform channel estimation based on the first signal to obtain M channel estimation results

903

Perform signal receiving or sending processing based on the M channel estimation results by using a target analog weight

FIG. 9

Second communication device

First communication device

Receive the first signal from the first communication device by using M groups of analog weights

First signal 1001

1002

Perform channel estimation based on the first signal to obtain M channel estimation results

1003

Perform, based on the M channel estimation results, performance sorting on the M groups of analog weights corresponding to the M channel estimation results

1004

Perform signal receiving or sending processing based on the performance sorting of the M groups of analog weights by using a target analog weight

FIG. 10

Second communication
device

First communication
device

Receive the first signal from the
first communication device by
using M groups of analog weights

First signal    1101

1102

Perform channel estimation based on the first
signal to obtain M channel estimation results

1103

Perform signal receiving or sending processing
based on the M channel estimation results by
using a target analog weight in weight codebooks

FIG. 11

Second communication
device

First communication
device

Receive the first signal from the
first communication device by
using M groups of analog weights

First signal    1201

1202

Perform channel estimation based on the first
signal to obtain M channel estimation results

1203

Obtain a target analog weight through calculation
based on the M channel estimation results

1204

Perform signal receiving or sending processing by
using the target analog weight

FIG. 12

1300

Processing module 1310

Interface module 1320

Communication apparatus

FIG. 13

Communication apparatus 140

Transceiver 1420

Processor 1410

1440

Memory 1430

FIG. 14

Interface 1502

Logic circuit 1501

Communication apparatus 150

FIG. 15

## INTERNATIONAL SEARCH REPORT

International application No.

**PCT/CN2023/088544**

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC: H04B H04L H04W

Documentation searched other than minimum documentation to the extent that such documents are included in the fields searched

Electronic data base consulted during the international search (name of data base and, where practicable, search terms used)

CNTXT; ENTXTC; DWPI; 3GPP: 模拟权, 模拟加权, 模拟波束, 混合波束成形, 多组, 组, 集合, 信道, 估计, 目标, 最优, 最佳, 合适, 适合, analog weight, hybrid beamforming, HBF, groups, sets, channel, estimat+, objective, optimal, suitable

### C. DOCUMENTS CONSIDERED TO BE RELEVANT

| Category* | Citation of document, with indication, where appropriate, of the relevant passages | Relevant to claim No. |
|---|---|---|
| A | CN 106921423 A (CHINA ACADEMY OF TELECOMMUNICATIONS TECHNOLOGY) 04 July 2017 (2017-07-04) description, paragraphs [0107]-[0157] | 1-21 |
| A | US 11115136 B1 (LG ELECTRONICS INC. et al.) 07 September 2021 (2021-09-07) entire document | 1-21 |
| A | WO 2021169831 A1 (HUAWEI TECHNOLOGIES CO., LTD.) 02 September 2021 (2021-09-02) entire document | 1-21 |
| A | CMCC. "R1-164893 Hybrid Beamforming for Massive MIMO" *3GPP TSG RAN WG1 #85*, 27 May 2016 (2016-05-27), entire document | 1-21 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 June 2023** | **21 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/088544**

| Patent document cited in search report | | | Publication date (day/month/year) | Patent family member(s) | | | Publication date (day/month/year) |
|---|---|---|---|---|---|---|---|
| CN | 106921423 | A | 04 July 2017 | WO | 2017114054 | A1 | 06 July 2017 |
| US | 11115136 | B1 | 07 September 2021 | None | | | |
| WO | 2021169831 | A1 | 02 September 2021 | CN | 113315555 | A | 27 August 2021 |

Form PCT/ISA/210 (patent family annex) (July 2022)

**REFERENCES CITED IN THE DESCRIPTION**

**Patent documents cited in the description**

- CN 202210435707X